# EUROPEAN PATENT APPLICATION

(11) **EP 3 023 876 A1**
(43) Date of publication of application: **25.05.2016**
(21) Application number: 16020007.7
(22) Date of filing: 29.08.2008
(51) Int. Cl.: G06F 11/36, G06F 9/44, G06N 5/04

(54) **QUALITY ASSURANCE TOOLS FOR USE WITH SOURCE CODE AND A SEMANTIC MODEL**

(30) Priority: 31.08.2007 US 969352 P
(62) Divisional of application: 08828603.4
(71) Applicant: Phase Change Software LLC, Golden, CO 80401 (US)
(72) Inventor: BUCUVALAS, Steven, Buffalo Creek, CO 80425 (US)
(74) Representative: Von Rohr Patentanwälte Partnerschaft mbB

(57) **Abstract**

Tools that provide quality assurance to improve the efficiency of developing software using a Finite Input Output Semantic Model (FIOSM, or herein referred to as a Semantic Model (SM) or Semantic Model Program) and automated reasoning services compatible with a semantic model. Exemplary embodiments of the tools allow a user to validate a semantic model and its related source software system and executable, while providing the enormous benefit of automating the quality assurance process. Instead of rigorous manual analysis of code to determine where a problem resides, the tools, through their relationship with the semantic model, visualize for the user on a display or in another tangible media where in the source software system a problem(s) resides.

## Description

### RELATED APPLICATION DATA

This application claims the benefit of and priority under 35 U.S.C. §119(e) to U.S. Provisional Application No.: 60/969,352 filed August 31, 2007, and is related to 11/693,491, filed March, 29, 2007, and published as U.S. Patent Application Publication US 2007-0266366 A1, both of which are incorporated herein by reference in their entirety.

### BACKGROUND

### Field of the Invention

An exemplary embodiment of this invention relates generally to software, and more specifically to one or more of software development, semantic comparison and subsumption reasoning of software in a software development environment and more particularly to software quality assurance and semantic model(s) (SM).

### Description of Related Art

Programs are complicated. Today, working with programs is complicated, too: Does my program do what it should? If I make changes in the program, have I introduced errors in parts that were correct before? Can I understand what my program does?

One approach to dealing with this complexity has been the development of programming languages and environments for end users. But while these advances, such as the spreadsheet, make it easier for people to create programs, and easier for people to understand programs, they have not made understanding programs easy enough. In fact, spreadsheet testing and debugging is an active area of research, responding to high error rates. In general, the difficulty in understanding what programs do leads to heavy reliance on testing of programs, rather than on analysis. But creating good test cases itself requires a good deal of analysis, and even with good test cases, uncertainty remains about the correctness of the programs that pass the tests.

### Summary

An alternative approach is to automate the common tasks of program analysis, so that the end user does not have to rely solely on understanding code directly. In ioRules, one exemplary system described herein and in the related application referenced above, common questions about programs that arise in software development and maintenance can be answered automatically, with assured correctness. The approach also supports flexible visualization of program function, so that the end user can explore what a program does from multiple viewpoints.

The ioRules approach builds on work on mathematical logic to construct models of program function, and to automatically evaluate the truth value of logical statements applied to these program analysis models.

At a high level, one exemplary embodiment of this invention capitalizes on the semantic equivalence between the Semantic model and a source software system from which it is generated. Tools described herein at least provide capabilities to validate the semantic model and its related source software system, and discuss some of the exemplary benefits of having a capability to show, or visualize for, a user where in the source software system a problem(s) resides.

These points are all important to understanding the value and use of the various capabilities and tools that are presented herein. This summary provides a high level overview of these capabilities to provide to the reader a background sense of how the various processes interrelate. More details are found in hereinafter as well as in the related application referenced above. Nothing in this document is intended to limit claims referenced in the other sections of this document or in the related application referenced above.

In general, the exemplary tools, procedures and techniques allow a user to validate the semantic model and its related source software system, while providing the enormous benefit of automating the quality assurance process. Instead of rigorous manual analysis of code to determine where a problem resides, the tools, through their relationship with the semantic model, are able to show the user where in the source software system a problem resides.

As described in the above referenced related application, the semantic model is a complete and equivalent representation of the behavior of a source software system, which can be queried to analyze the behavior of the source system. The queries include logical statements and actuated using subsumption reasoning. The creation of the semantic model and use of subsumption reasoning enables the automation of Quality Assurance (QA) and software validation activities that are traditionally done manually, and at great expense of time and cost. One key is that the semantic model is a complete and correct (accurate and exhaustive) behavioral representation of both the source software system composed by programmers as well as the executable generated from a source software system. Through the subsumption reasoning process, the semantic model is used to validate the source software system. Since the source software system is the source of the executable, validating the semantic model is:
1. equivalent to validating the source software system, and
2. equivalent to validating the runtime or production version of the system.

By using the exemplary tools provided herein, users can answer important questions about a program automatically, without empirical testing. While users need to understand the domain problem their software intends to address, they do not have to do the analysis of their program required to create test cases in non-automated approaches. Further, they do not suffer the uncertainty about correctness and completeness (accurate and exhaustive) that reliance on testing leaves, even when test cases are automatically generated.

To do this, the tools evaluate a "code path" (or code execution path) which means a path through any computer program (source code or executable) that the program logic follows starting with accepting a particular set of inputs, and ending with generating the corresponding output. This concept corresponds to a pattern in the above referenced related application. One set of inputs may invoke different program statements than another set of inputs and therefore defines a different code path through the program than another set of inputs. The code path through any executable computer program has a corresponding code path that is found in the source program. If a program error occurs in an executable program along a given code path, the corresponding code path in the source program is a good place for a programmer to begin looking for that error. Subsets of the executable semantic model and its associated source software system can be grouped into specific code paths like any other software can. The tools herein, when used on a semantic model, allow a user to visualize program errors along a given code path, or pattern, and highlight where these errors exist in the corresponding source software system.

In conventional software quality assurance, it is common for a problem to be found in testing that is hard to track back down into the code related to that code path in the source program. Often, the programmer cannot recreate the problem, or it may be possible to recreate the problem, but difficult to isolate where in the code the problem is occurring.

Depending on the query, a valid query result can be unexpected just as easily as an invalid result can. In other words, it can be easier and more productive to formulate the negative of a valid query for some QA tasks than to use the valid query. In this case, if the user created a query that they expected would be invalid, a valid result can require a need for further investigation.

A code path in a large program can include a large number of program statements. When an unexpected result is found, the problem could occur anywhere in the code path or pattern for that particular scenario. So once a problem is identified, it's important to know which code path was involved and then be able to drill down into multiple areas along that code path. So for example, after running a validation that had an unexpected result, a user could greatly benefit from being able to see a highlighted output row in a semantic model that is involved in the unexpected result and then be able to drill into the corresponding source code along the code path associated with that row. It may not be sufficient to just point out one spot in the code. In accordance with one exemplary embodiment a user is able to review the code along an entire code path.

As the exemplary tools for validation are discussed, there are several exemplary benefits continually presented. Each of these benefits relates to improved software development and validation productivity. The benefits, are, but not limited to:
- The ability to structure queries (policies and regression sets) quickly and correctly improves software development project productivity.
- When a query results in an unexpected and invalid outcome, productivity is greatly improved if the user can immediately and easily be directed to the part of the source software system that is in conflict with the query.
- When a query results in an unexpected but valid outcome, productivity is greatly improved if the user can immediately and easily be directed to a series of code paths in the source software system that are consistent with the query.
- At times, it is important to be able to drill down to a specific line of source code at multiple points along a particular software code path in a source software system that is related to a particular query.
- As the size of the application program to be validated increases, the economic advantage of these benefits becomes greater and greater.

Five exemplary tools are discussed herein:
1. Quality Display of Semantic Model: a tool that utilizes the semantic model to display in a human readable and understandable fashion to facilitate one or more of exploration, viewing, charting, and querying for one or more of quality assurance, user acceptance testing, debugging, unit testing, integration testing, and the like.
2. Automated Creation of Regression Sets: a tool that at least enables creation of regression sets as the whole or subset(s) of a semantic model to be used in validation of future releases of the source system.
3. Automated Validation: a tool that at least enables through subsumption reasoning the validation of behavior between multiple semantic models, in whole or part.
4. Modes of Query: a tool that at least enables multiple modalities of query against a generated semantic model corresponding to a source program.
5. Semantic Model to Source Connection: a tool that at least enables data flow analysis from a generated semantic model back to the source program.

As discussed herein:
Master Semantic Model - Refers to the latest working semantic model for a project that was generated from a specification.

Regression Semantic Model - Refers to a semantic model that was saved as a regression set; which can either be a previous full system semantic model or just a portion (subset) of the semantic model.

Policy Semantic Model - Refers to the two semantic models that are generated from a policy; one corresponding to the query component of the policy (known as the query semantic model), the second corresponding to the constraint portion of the policy (known as the constraint semantic model). The query refines the portion of the master SM that is being reviewed, and the constraint is then tested against this queried portion.

### Quality Display of Semantic Model

The quality display tool assumes that a program has been created and a semantic model has been generated in accordance with, for example, the techniques described in the related application referenced above. This generated semantic model is the method for analysis using subsumption reasoning used in this invention as described in the section entitled "FIOSM Automated Generation Process" as well as subsection entitled "Path Generation" from the related application referenced above. Moreover, the SM may be thought of as a "database" representing the computer program, by which one can "ask questions," and execute "queries" against, in a manner similar to that used in database environments using "report/query" tools.

In the related application referenced above, one can observe how a SM is generated in the form of "patterns," each pattern representing one logical path through the system, i.e., given a set of inputs, the resultant output. After SM generation, the SM is persisted to some form of long-term storage, such as a database, computer readable media, memory or a file system on, for example, a computer hard drive. Quality display begins with the assumption that there exists a SM residing on some form of storage.

Through subsumption and reasoning services, queries can be performed against the semantic model. Unlike other programming languages in which compilation creates a computer-only readable executable of the source code, this exemplary embodiment provides the capability to query the semantic model from any view necessary and display, analyze, manipulate and save and/or report the results.

Queries are composed as conjunctions of data element expressions as defined in the related application referenced above.

The unique ability to query and analyze meaningful information contained within a semantic model is made possible by the comprehensive set of "reasoning and subsumption" services as discussed in the related application referenced above. These services facilitate the ability to query meaningful information and analyze the entire structural composition of the SM by which meaningful analysis may be derived. One exemplary novel consequence of these "reasoning and subsumption" services is that it becomes possible for an external computer program to utilize these services to generate and display meaningful graphical renderings for human consumption.

In the context of quality assurance of a computer program, this becomes immensely valuable with respect to allowing a human to validate and verify a computer program that is based upon a semantic model. No longer does one have to perform "black-box testing" to try and probe what exactly is the output of this program given a set of inputs to the program. Instead, one can visually "explore" in great detail exactly what the set of outputs will be in addition to the "reasons behind" why those outputs will be generated, i.e., range of input values as well as code path constraints and rules contained within the program logic.

### Automated Creation of Regression Sets

Automated creation of regression sets is an invention that according to one exemplary embodiment enables the creation of regression sets as the whole or subset of a semantic model to be used in validation of updates to the source system. A regression set is a complete and correct snapshot of the behavior of all or a portion of a source system. To facilitate effective validation of updates, one exemplary embodiment of the invention allows a subset of the system, defined in terms of a logical query against the semantic model, to be identified as a regression set. The regression set could similarly represent the entire system.

Once the set of patterns for a regression set has been identified, a copy of all the patterns is made and saved as a semantic model. Validation in this context is defined to mean validating conformance of the input-to-output behavior of the saved patterns and the master semantic model. Subsequently, the regression set can be saved as a whole or part of the source system. The regression set can be saved and available to be loaded in the future for regression. This model contains all the system behavior in the set of selected patterns, plus the details on where in the source the logic originated for all data elements. The capability of capturing the semantic model to source relationship utilizes the Semantic Model to Source Connection invention discussed herein. These saved patterns can be viewed later, regardless of the state of the master semantic model.

Once saved as a regression set, the saved patterns can be validated against the master semantic model. To validate a regression set, it is loaded from long term persistence and validated against all patterns in the regression set. For each pattern, at least one pattern in the semantic model, all of whose data element constraints must subsume the respective data element constraint in the regression set pattern, must be found. The behavior of all data elements in the regression set pattern must be simultaneously valid within at least one pattern in the master semantic model for the regression pattern to be valid. If all patterns in the regression set are validated in such a way, the system behavior encompassed by the regression set is confirmed to still exist with the master semantic model. Simply stated, given a certain set of inputs represented in the regression set, the same outputs are guaranteed to result from the master semantic model.

In the case where a regression set is a subset of the whole system, this enables a user to verify that the entire functionality within the subset of the system is preserved after subsequent revisions are made. In the case where a regression set is the whole system, this enables a user to verify that the entire functionality of the system when the regression set was created is preserved after subsequent enhancements are added.

A regression set fails validation if one or more patterns fail validation. A pattern fails if the constraints on all data elements are not valid at some point simultaneously within the master semantic model. For failed patterns, the data elements whose constraints are not supported by the master semantic model can be identified and displayed for the user, together with the source reference for the constraints. The Semantic Model to Source Connection tool supports further analysis to determine if the regression set is invalid or if the master semantic model contains errors.

### Automated Validation

Automated Validation is an invention that allows the master semantic model to be automatically validated against: (1) any past semantic models (referred to as regression models), and (2) any query and constraints combinations (referred to as policies). The result of the validation process is confirmation of whether the master SM is still consistent in terms of encapsulated behavior with the past regression models and policies. If not consistent in behavior, then through the Semantic Model to Source Connect tool, a user can drill down into the failure to find the inconsistency and ultimately trace it back to the source specification.

This is accomplished by the ability to capture past behavior of a project's master SM in regression SMs and policy SMs; and persist these subsequent SMs (in the case of policy, the specification is persisted from which a SM can be built) for later comparison against any changes that may have been made to the master SM. The ability to persist regression SMs and policy SMs to storage (such as in a database and/or file system or comparable storage device/media) at a previous state of the master SM allows the user to capture and archive past behavior. This also implies that a user can later extract these regression SMs and policy SMs at a later date after modifications have been made to the master SM. Thus, the user can compare and reapply the validation to see how and what kinds of behavior has changed or remained the same. The SMs may also be thought of as a "database" representing the computer program's encapsulated behavior, by which one can "ask questions," and execute "queries" against (just as one does against a database using "Report/Query" tools). Because the regression SMs and policy SMs are all semantic models, subsumption based reasoning can be used to find a subset relationship.

Subsumption based reasoning is the subset comparison of the input-output effect on data elements between two semantic models; subsumption reasoning on semantic models is described in the above referenced related application.

The process of automated validation with respect to regression SMs is to cycle through each pattern in the regression SM and try to find at least one other pattern in the master SM that subsumes the regression's pattern. Each pattern comprises all the data elements, and each data element has an associated constraint. The constraint could be *ANY* which implies an unbounded range, and can only be subsumed by another *ANY* constraint. The constraint could be a conjunction of constraints, in which case all of the subconstraints must be subsumed simultaneously. Every single pattern in the regression SM must be subsumed in order for a user to conclude that the master SM still encapsulates all the behavior expressed in the regression SM.

The process of automated validation with respect to policy SMs is similar in that it takes its two SM's and revalidates them against the master SM. The query SM is used to select the portion of the master SM to be validated, and the constraint SM validates the selected patterns consistent with the validation method discussed above.

### Modes of Query

Modes of Query, in accordance with one exemplary embodiment, enable multiple modalities of query against a generated semantic model of one or more source programs. Using subsumption reasoning, the system can determine if a semantic model is a subset or intersection of the behavior defined by another semantic model.

The master semantic model is the generated semantic model representing the master source program. The query semantic model is generated from the query expression. The constraint or results semantic model is generated from the constraint expression and is the set of patterns that can logically satisfy the query (intersection) or whose behavior is entirely subsumed by the query (subset). The method is broken down into two functions: query method and constraint method.

The query method is defined by query modes (subset, intersect) and constraints on the input and output values. This combination defines the query expression from which the query semantic model is generated. The input and output data elements of the query semantic model must be the same as the master semantic model. Subsumption reasoning is then used to select the desired subset patterns from the master semantic model, using either the intersection or subset method. All patterns that meet the subsumption criteria are returned and can then be used as input into the constraint method of modes of query.

The subset mode selects patterns from the master semantic model in the following fashion.

If a pattern in the master semantic model is subsumed by any pattern in the query semantic model, then it is selected.
The intersection mode selects patterns from the master semantic model in the following fashion.

If a pattern in the master semantic model is subsumed by any pattern in the query semantic model, then it is selected.

Or, if a data expression in a pattern in the semantic model is negated and conjoined to form a new set of patterns and any of the resulting patterns are subsumed by a pattern in the query semantic model, then it is selected.
Note: negation of a pattern follows the typical rules of logic, and since the semantic model is in disjunctive normal form, data expressions contain only conjunctions. Negation may cause disjunctions to be inserted, such a pattern will be split into two patterns connected by a disjunction.

To illustrate this problem, a simple mortgage products example will be defined as follows:

| Mortgage Product Code | Loan Amount |
|---|---|
| C30 | >= 0, <= 417,000 |
| C15 | >= 0, <= 417,000 |
| NC15 | >=0, <=750,000 |
| NC30 | >= 200,000, <= 750,000 |

A subset query can be defined with the constraint of Loan Amount <= 417,000. Using a subset query mode, the result of patterns subsumed from the master semantic model would be 2 patterns {C30, C15}. NC30 and NC15 are eliminated from the query because its Loan Amount range is > 417,000. A subset query mode is defined as a formal subset of the master semantic model using the defined input and output constraints from the query semantic model.

An intersection query is defined as a set of patterns returned from the master semantic model whose input and output constraints intersect with the query's input and output constraints. Given the same query definition as the subset query above with a Loan Amount constraint of <= 417,000, a query intersection mode would return 4 patterns from the subsumption of the master semantic model {C30, C15, NC15, NC30}. NC15 and NC30 would be included in the intersection because the constraint <= 417,000 intersects with the constraints of the NC15 and NC30 pattern.

The set of patterns returned from the query mode are validated using the constraint semantic model The constraint method is defined by match preference modes (match all, match one or more, match only one, match none) and constraints on the input and output values. This combination defines the constraint expression from which the constraint semantic model is generated. The input and output data elements of the constraint semantic model must be the same as the master semantic model. Using the same example listed above, the mortgage products are defined as follows:

| Mortgage Product Code | Loan Amount |
|---|---|
| C30 | >= 0, <= 417,000 |
| C15 | >= 0, <= 417,000 |
| NC15 | >=0, <=750,000 |
| NC30 | >= 200,000, <= 750,000 |

Creating a subset query mode with the constraint of Loan Amount <= 417,000, the query mode returns 2 subsumed patterns from the master model {C30, C15}. For the constraint expression, a constraint of Mortgage Product Code = C30 is created and the constraint semantic model is generated. It can then be subsumed against the set of patterns returned from the query mode {C30,C15}. The constraint returns patterns that subsume from the query results {C30}. C15 is eliminated because the constraint is defined as "equals C30." At this juncture a match preference can be applied.

Exemplary match preferences are defined as:
1. Match All Patterns: all patterns from the query must be subsumed by the constraint method.
2. Match One or More Patterns: at least one pattern from the query must be subsumed by the constraint method.
3. Match Only One Pattern: only one pattern from the query must be subsumed by the constraint method.
4. Match No Patterns: no patterns from the query should be subsumed by the constraint method.

For example, a constraint semantic model that subsumes one pattern from the query and has a match preference of "Match Only One Pattern" will succeed, as will "Match One or more Patterns". A constraint semantic model that subsumes no patterns will only satisfy the "Match No Patterns".

### Semantic Model to Source Connection

The Semantic Model to Source Connection is a tool that in accordance with one exemplary embodiment enables data flow analysis from a generated semantic model back to the source program.

As model logic is translated from the source code during generation of the semantic model, references back to the source are associated with corresponding model logic. The source information contains the location in the program source of the statements and operations corresponding to the model logic generated. Source location can be in a variety of forms. If the authoring system uses a text based computer language, then the source location would a location in a text file. If the authoring system is a GUI-based authoring approach, the source location would a representation of the pertinent GUI component.

During generation of the semantic model (as described in the related application), the processes that calculate the data flow from input to output proceed operation by operation, the source information is also accumulated operation by operation. The logic and source connection information is accumulated for all input and output data elements in the system, and provide a complete picture not only of the behavior of the system, but also of the precise source location(s) that specified the behavior.

This accumulation of source information enables the tool user to trace back to the source the exact locations where a given data element is altered or constrained. In the display of the functionality encompassed by the semantic model, the source connection information is displayed whenever a data element is selected from a pattern. In the exemplary embodiments, source information is organized by table/predicate/subprocedure call and can provide a direct link back to the source for easy access to the user. The user can see, for example, that a particular data element is partially constrained by an input constraint on a main procedure, then passed to a subprocedure and further constrained by a particular rule there. The tool allows display of direct range constraints, why those constraints are applied to the data element, and where they came from. The tool also allows the logical relationships with other data elements and identities of dependant data elements to be easily illustrated for the user.

This tool is an important component to enabling visualization of quality and ensuring correct behavior of the system by collecting information on the data flow of the data elements and displaying that information to the user.

Since the tool user is verifying the quality of a program written in "source;" it is particularly useful to have faults or errors discovered in the analysis of the semantic models, connect back to the source of those faults or errors.

### Model-driven Quality Assurance for End Users, an Example

Because nontrivial questions about programs are almost never decidable in general (Rice's Theorem, see Wikipedia entry), ioRules, as discussed in the related application, restricts the programs that can be modeled. These restrictions do not prevent the system from representing real programs in business domains like finance. To illustrate this, here is an example application.

### • Mortgage Pricing

The business problem that Pat, a financial specialist, wants to solve is product pricing for a large mortgage bank. The core of the solution is a program that calculates eligibility and pricing for a range of mortgage types.

The first portion of Pat's problem is to address eligibility. There are myriad mortgage products that address the needs of differing segments of the consumer population. Examples of these are:
- "Conforming" loan products, supported by quasi-government agencies like "Fannie Mae" (FNMA) and "Freddie Mac" (FHLM), are intended to help mainstream Americans to access funding needed for home ownership.
- Low-income programs, such as FHA products, address the mortgage needs of Americans earning less than average income.
- Veterans Administration (VA) products provide veterans access to special programs that make it easier for them to purchase a home.
- "Non-conforming" programs address the needs of the wealthier homebuyers, who purchase more expensive homes and special-use properties.

Each product has rigid eligibility guidelines, that is to say, standards that a particular consumer and their prospective home purchase must satisfy. These standards include:
- Which loan amounts are eligible?
- What percentage of the property's value can be mortgaged?
- What must the consumer's income level be?
- How good is the consumer's credit history?

Part of Pat's task is to encode into her program the rules that allow it to offer only the products appropriate to the consumer's particular mortgage circumstance.

Pat's program must address not only eligibility, but also custom pricing. Lenders are typically concerned about late payment and default on loans. The competition in the mortgage industry encourages lenders to offer pricing breaks to consumers who have good prospects to pay their mortgage payments in a timely and reliable fashion. Similarly, consumers whose prospects of reliable payment are not as good, or who are purchasing properties that are at risk of being harmed by natural disasters, may be asked to pay a slightly higher price relative to others.

Both eligibility and custom pricing are amenable to being modeled and developed in a rules-based fashion.

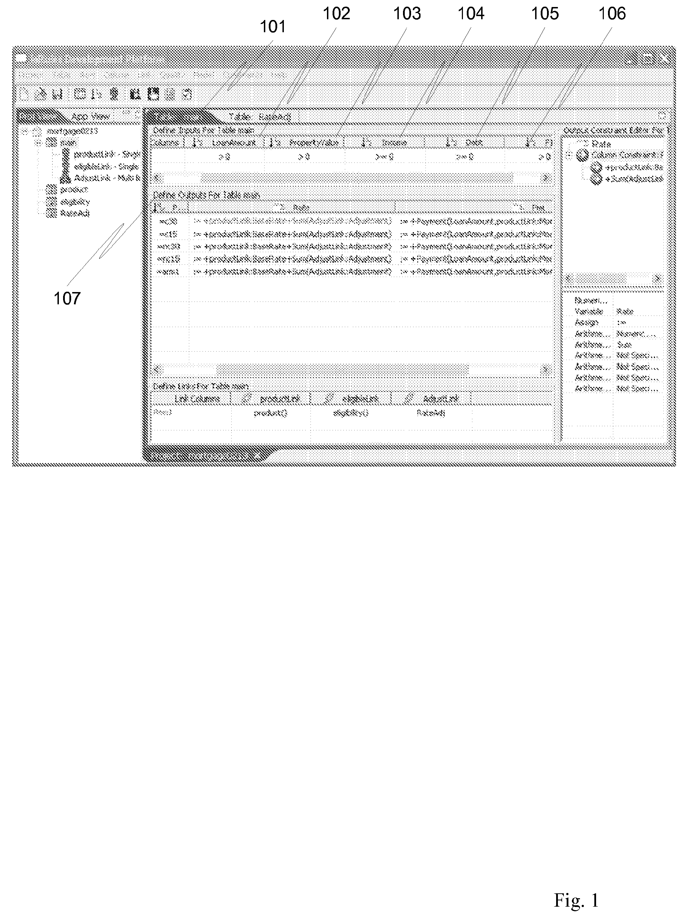

An exemplary embodiment of the development interface (for which more detail is illustrated in relation to the flowcharts) is designed by analogy to other common business tools: spreadsheets and database query tools. Its core development concept is a "table" which is used to specify the rules-based system. An exemplary specification interface is illustrated in Figure 1.

A table allows Pat to express the input description of her system, as well as its output and calculation behavior. The system, although visually quite different, can be viewed as having a strong conceptual inheritance from logic-based programming approaches like Prolog. For readers familiar with Prolog, the "input" portion of the presentation can be correlated to the "head" of Prolog predicates, and the "output" portion to the "tail" portion of Prolog predicates. The columns can be correlated to the terms in an individual predicate, and rows correspond to repetition of predicates for different potential solutions.

As illustrated in Fig. 1, Pat has defined a "main" table 101 whose input columns are: loan amount 102, property value 103, income 104, debt 105, and FICO 106 (consumer credit score, not fully visible). These comprise the data needed to determine product eligibility and pricing for consumers.

The output data needed by the consumer to make a mortgage selection are the product type, the rate being paid, and the monthly payment. The output area 107 shows the structure of the output response of the system and the possible solutions. Fig. 1 shows that Pat's system is offering five different potential product choices:
- a conforming 30-year mortgage (c30),
- a conforming 15-year mortgage (c15),
- a non-conforming 30-year mortgage (nc30),
- a non-conforming 15-year mortgage (nc15), and
- a conforming 1-year adjustable rate mortgage (arml).

The system allows for the problem to broken into conceptual chunks by allowing tables to be linked together. Pat uses this facility to create three subordinate tables, not shown, that she links to "main."

They are:
- "product" which describes the financial behavior of the product
- "eligibility" which defines the eligibility rules of each product, and
- "RateAdj" which defines the pricing adjustment rules for each product.

Pat completes her program, but is it correct? One approach to determining this is to ask if known constraints are satisfied.

For example, Pat knows that if her program is correct, no c30 loan should have an amount greater than $417K. She wants to determine whether in fact her program obeys this constraint.

In a traditional software engineering approach, Pat would construct one or more test cases in an effort to assure herself that her program honors this constraint. In the process, she would have to carry out some kind of analysis of her program, trying to identify under what conditions a possible violation could arise. However thorough Pat's analysis is, and even if her program passes all the tests, Pat must still worry that there might be a violation for some other data.

The exemplary tools allow Pat to work in a different way. First, she asks the system to generate a complete model of her program, capturing all of the possible output-input dependencies in the code. Pat then expresses her constraint, that c30 mortgages must have a loan amount less than or equal to $417K, also using the ioRules editor.

To do this, Pat specifies that Product in the cases she is concerned with is "c30," and that LoanAmount must be less than or equal to $417K. This is done in the policy interface.

Using the Policy and Regression Validator, Pat asks the system to evaluate the constraint, by clicking the "Validate Policy" button. The system creates a model for the constraint, and determines whether or not the model of her program is subsumed by the model for the constraint, that is, whether the logic of her program implies that the constraint is always satisfied. Here the answer is yes.

On further reflection, Pat realizes that not just a c30 loan, but any conventional loan, should satisfy the same constraint on loan amount. Pat therefore modifies her policy to include c15 as well as c30. Now when Pat asks for the new policy to be validated, the system indicates that it is NOT satisfied. Pat knows she has an error to correct.

Now Pat can use the modes of query tool to learn WHY the error is occurring. Pat, for example, can select a trace button which opens the window that indicates that the eligibility table specifies a loan limit for c15 of 418K, clearly a mistake. Pat corrects this error and moves to her next task.

How is this done? As discussed in the related application, this is accomplished by creating a model representation that expresses the semantics (i.e. behavior) of the rules-based system in a fashion that is compatible with a branch of automated reasoning called subsumption reasoning.

Like a programmer, the Policy and Regression Validator examines all the possible program paths and data flows to produce a model of all the possible scenarios of program input-output. This completeness and correctness contrasts with the fundamentally incomplete process of manually creating test cases. Sets of test cases are, in a sense, inexact and incomplete models for any but trivial programs.

Subsumption reasoning automates the proving of a subset relationship between two logical models. In the context of Pat's policy example above, the policy constraint defines a model of behavior, to which the mortgage system must conform. One can restate this in terms of subsumption reasoning: the mortgage system's behavior must be a subset of the behavior defined by the "loan amount limit" policy constraint.

Subsumption reasoning has been extensively studied in an area of mathematical logic called Description Logic, and has been applied commercially in the W3C OWL DL standard. The purpose of OWL DL is to create a model of meaning (semantics) for the web, and then to use subsumption reasoning to allow computer-based intelligent agents to reason about content presented on the Web.

One of the most important features of the Description Logic work is limiting the power of the logic (i.e. expressiveness) to a level below first-order logic. This restricted logic retains the ability to usefully describe web resources, but also guarantees that subsumption reasoning can determine subset relationships decidably.

Modes of query and the Policy and Regression Validator tools re-apply the Description Logic approach to rules-based systems. By limiting the expressiveness of the rules-based language to a set of program constructs below the universal machine level, it insures decidability of subsumption reasoning.

The same techniques support Pat, as an end user, in performing other software engineering tasks, including regression. Pat faces a regression problem when she needs to extend a correct program, and needs to be sure that when she does this she doesn't introduce bugs in the part that was already working correctly.

In traditional software engineering, Pat would have to construct a regression test suite, a collection of tests that, she hopes, adequately check the behavior of the new program. As noted earlier, creating an adequate test suite requires analysis of her code that Pat, as an end user, probably isn't professionally trained to carry out, it being typically the responsibility of a Quality Assurance Analyst. Using the Automated Creation of Regression sets tool, Pat can create not a regression test suite, but a collection of regression models. She does this by selecting portions of the model that capture the behavior of the program for meaningful parts of the overall problem. For example, Pat can choose to divide the model for her program into parts that describe different mortgage products, c30, c15, and so on. Additionally, she can produce a submodel for each of these products, giving each a name, like "c30Regression." This can be referred to as a functional area regression test model.

Now suppose Pat needs to add a new product, c50. She needs to be sure that when she adds this product she doesn't introduce errors for other products. After she has made the extensions to her program, she uses the regression validator function. The Validator allows her to choose which regression models she wants to check, and displays the results. In this case, all of the regression checks are satisfied. Pat has also chosen to recheck the policy she set up earlier, LoanLimit, and that passes, too.

Pat can use the model created to perform other, less well structured, tasks, as well. The Quality Display of a Semantic Model tool allows Pat to explore the model from many viewpoints. In fact, Pat used the browsing capability to specify the submodels that she needed for her regression task. She can use the same interface for other purposes.

Suppose Pat is concerned about customers with weak credit, and how her program handles them. Instead of dividing the functionality of her program by mortgage product, she can divide it by FICO, a creditworthiness score used in the mortgage industry.

Pat can see that her program divides the range of FICO scores at 0, 500, and 550, which makes sense to her. She can also see what products are available in each FICO range, though the reasoning is not completely trivial, because the FICO range is not divided into disjoint subranges in the display. Pat can work out that for customers with FICO between 0 and 500, products c30, c15, and arml are offered; for customers with FICO between 500 and 550, nc30 and nc15 are also available, and for customers with FICO greater than 550, the same products are offered, that is, there is no difference, in terms of available products, among customers with FICO of 500 or above, though other results, such as interest, could change.

The exemplary embodiments of the present invention can provide a number of advantages and benefits above and beyond those enumerated above depending on the particular configuration, implementation environment and needs of a user. These and other advantages will be apparent from the disclosure of the invention(s) contained herein.

As used herein, the phrases "at least one," "one or more," and "and/or" are openended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic even if performance of the process or operation uses human input, whether material or immaterial, received before performance of the process or operation. Human input is deemed to be material if such input influences how the process or operation will be performed. Human input that consents to the performance of the process or operation is not deemed to be "material".

The term "computer-readable medium" as used herein refers to any tangible storage and/or transmission medium that participate in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the invention is considered to include a tangible storage medium or distribution medium and art-recognized equivalents and successor media, in which the software implementations of the present invention are stored.

The terms "determine", "calculate" and "compute," and variations thereof, as used herein, are used interchangeably and include any type of methodology, process, mathematical operation or technique.

The term "module" as used herein refers to any known or later developed hardware, software, firmware, artificial intelligence, expert system, fuzzy logic, or combination of hardware and software that is capable of performing the functionality associated with that element. Also, while the invention is described in terms of exemplary embodiments, it should be appreciated that individual aspects of the invention can be separately claimed.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below.

These and other aspects, features and advantages of this invention are described in, or are apparent from, the following detailed description of the exemplary embodiments.

### BRIEF DESCRIPTION OF THE DRAWINGS

The exemplary embodiments of the invention will be described in detail, with reference to the following figures wherein:
Fig. 1 illustrates an exemplary ioRules specification user interface according to this invention.
Fig. 2 illustrates an exemplary system including quality assurance tools according to this invention.
Fig. 3 illustrates the visual display of patterns for a semantic model according to this invention.
Fig. 4 illustrates the quality browser displaying Product, as it relates to the output variable "Rate" according to this invention.
Fig. 5 illustrates the quality browser displaying patterns from a semantic model in the form of a table.
Fig. 6 illustrates the visual display of numeric calculations according to this invention.
Fig. 7 illustrates the visual display of numeric constraints according to this invention.
Fig. 8 illustrates the visual charting of data elements in pie-chart format according to this invention.
Fig. 9 illustrates pattern identification and isolation in the master semantic model according to this invention.
Fig. 10 illustrates a regression set interface according to this invention.
Fig. 11 illustrates the viewing of a saved regression set according to this invention.
Fig. 12 illustrates a suite of regression sets after being run on a policy and regression validator according to this invention.
Fig. 13 illustrates details of a failed regression set in a regression TracesScreen according to this invention.
Fig. 14 illustrates an automated validation tool according to this invention.
Fig. 15 illustrates the creation and saving of a regression set from the quality browser according to this invention.
Fig. 16 illustrates the creation and saving of a polity from the policy editor according to this invention.
Fig. 17 illustrates an exemplary regression set trace according to this invention.
Fig. 18 illustrates an exemplary policy trace according to this invention.
Fig. 19 illustrates an exemplary embodiment of the policy editor reflecting the mode of query operations according to this invention.
Fig. 20 illustrates an exemplary embodiment of the visual display (Table Version) of source connect for a semantic model according to this invention.
Fig. 21 illustrates an exemplary embodiment of the visual display (Predicate Version) of source connect for a semantic model according to this invention.
Fig. 22 illustrates an exemplary method of developing a new program from a developer perspective according to this invention.
Fig. 23 illustrates an exemplary method of modifying an existing program from a developer perspective according to this invention.
Fig. 24 illustrates an exemplary method of regression testing for an existing program from a developer perspective according to this invention.
Fig. 25 illustrates an exemplary method of quality assurance testing for a new or updated program according to this invention.
Fig. 26 illustrates an exemplary method of regression testing according to this invention.

### DETAILED DESCRIPTION

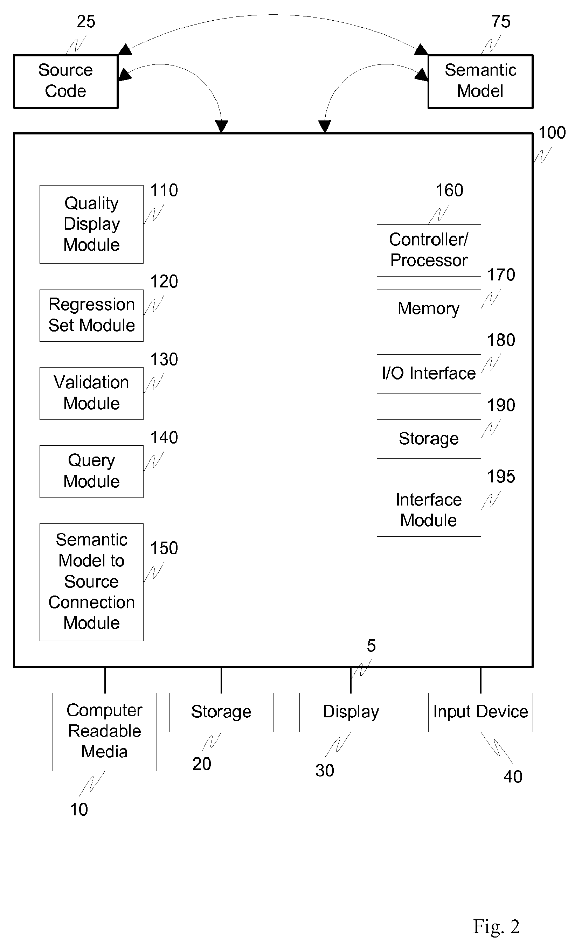

Fig. 2 illustrates an exemplary quality assurance system 100. The quality assurance system 100 is associated with source code 25 and a semantic model 75. The quality assurance system 100 includes a quality display module 110, a regression set module 120, a validation module 130, a query module 140, a semantic model to source connection module 150, a controller/processor 160, a memory 170, an I/O interface 180, storage 190 and an interface module 195, managing the generation and display of the various graphical user interfaces, all interconnected by one or more links 5 (not all shown) such as wired and/or wireless links. The quality assurance system 100 is optionally connected to one or more of an input device 40, such as a keyboard and/or mouse, a display 30, storage 20 and computer-readable media 10, via wired and/or wireless link 5.

### Quality Display of a Semantic Model using the Quality Browser

The Quality Browser is a visualization tool supported by the quality display module 110, interface module 195, controller 160, memory 170, I/O interface 180, interface module 195 and storage 190, that at least enables a user to visually render a semantic model in useful and meaningful ways. The quality assurance system 100 can query, analyze and display the semantic model 75. The Quality Browser is an example of a result of that capability. The operations of the Quality Browser are discussed in relation to the following examples and accompanying flowcharts.

Example #1- Visual Display of patterns for a Semantic Model.

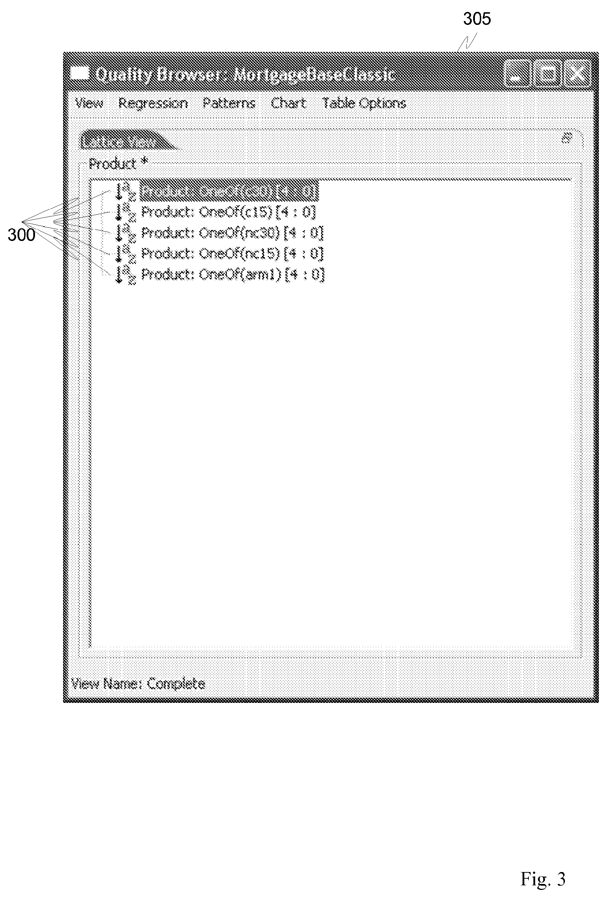

Fig. 3 illustrates the Quality Browser displaying the patterns 300 for an exemplary mortgage application. The patterns are based on the output variable "Product." Note that the application is shown to have a total of 20 patterns, based upon the rendering of the selected output data element "Product" (in this example). Each of the five products (i.e. c30, c15, nc30, nc15 and arml) are shown to have 4 possible code paths through the system, totaling 20 paths through the system. The Quality Browser user interface tool allows the user to choose one or more input or output data elements and render all patterns relating to the user provided data element(s).

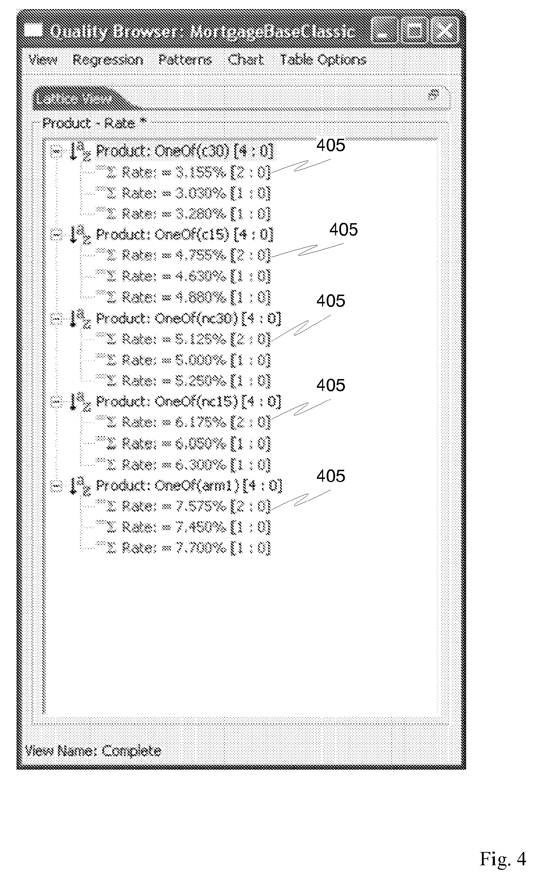

As an example, the user has asked to query the output data element Product. The Quality Browser is able to do this by querying the semantic model 75, and returning the patterns that data element and displaying them via interface 305 on display 30. The resultant display in the Quality Browser tool is called the 'Lattice View' as illustrated in Fig. 4. In Fig. 4, Quality Browser is displaying Product, as it relates to the output variable, 'Rate,' and in this particular example, mortgage rates as they relate to the type of Product.

Note how innovative this display is of the semantic model. Specifically, a user can discern from the Quality Brower's display in Fig. 4 the following:
1. For each of the five products (i.e. c30, c15, nc30, nc15 and arm1), the user can visualize the set of possible mortgage rates for each.
2. Note how the display provides the pattern(s) showing product c30 will offer the lowest rates, while arml is offering the highest rates.
3. For each product, the first rate is the base rate 405, which has two patterns. The other two rates, with one pattern each, represent adjustments, specifically, an adjustment lower for a customer with good credit and an adjustment higher for customers with bad credit.

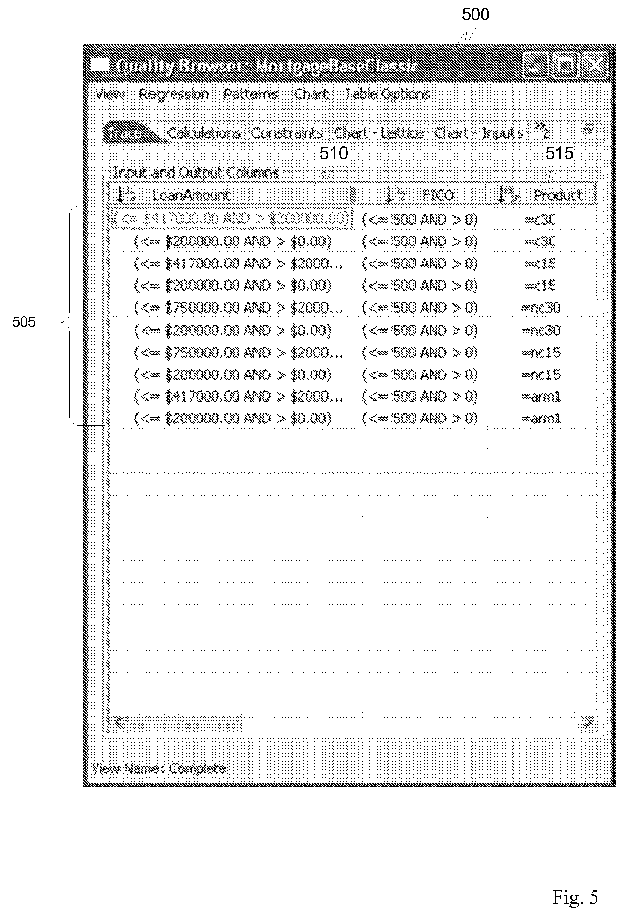

Fig. 5 illustrates a user interface 500 that demonstrates how the Quality Browser is able to display patterns from the semantic model 75 in the form of a table including input and output columns. In the interface illustrated in Fig. 5, the total number of patterns (based on FICO score > 0 and < 500) are displayed. Notice here that the Quality Browser tool is rendering 10 patterns 505, along with ranges and values for any input or output column the user chooses to visualize. In this view, the Quality Browser renders the input data element LoanAmount 510, with its corresponding numeric ranges as it relates to the FICO constraint (i.e. FICO > 0 and FICO < 500). In addition, the Quality Browser tool renders the valid products 515 for the output data element, named Product (again, as it relates to the FICO constraint).

As will be appreciated from the following description of the Policy Trace as well as Policy and Regression Validator, these tools are also able to display pattern(s) from the semantic model 75.

Example #2 - Visual Display of "numeric operations" for Data Elements in a Semantic Model

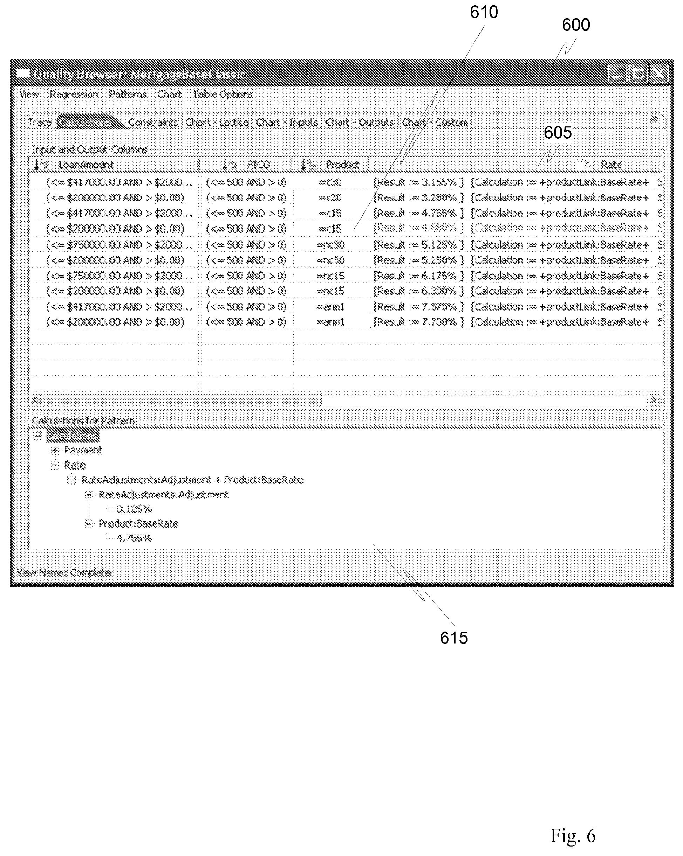

In Fig. 6, the Quality Browser module rendered the 10 patterns corresponding to the FICO constraints shown above in Fig. 5, however, the Quality Browser is also visually rendering an output column called Rate 605 in interface 600. This output column is of type numeric, and is used in the semantic model 75 to compute mortgage rates. In this rendering, the rate is selected on the 4th row 610, with a resultant computation of 4.88%.

Notice the novelty shown in the "Calculations for Pattern" pane 615 at the bottom of the interface 600 in Fig. 6. Here the Quality Browser is rendering the following information from the semantic model 75 relating to the Rate calculation:
1. The type of computation for Rate. In this example, it is an addition operation.
2. The location of the Rate computation. In this example, the Quality Browser is rendering the fact that the computation occurs in the RateAdjustments source table.
3. The operands involved in the calculation. In this example, they are:
   3.1. The Adjustment numeric variable, defined in the RateAdjustments table (note the value of 0.125%.
   3.2. The BaseRate numeric variable, defined in the Product table (note the value of 4.755%

It is important to note that other visualization tools described herein are also able to display numeric calculations from the semantic model. These include the Policy Trace and Regression Trace tools.

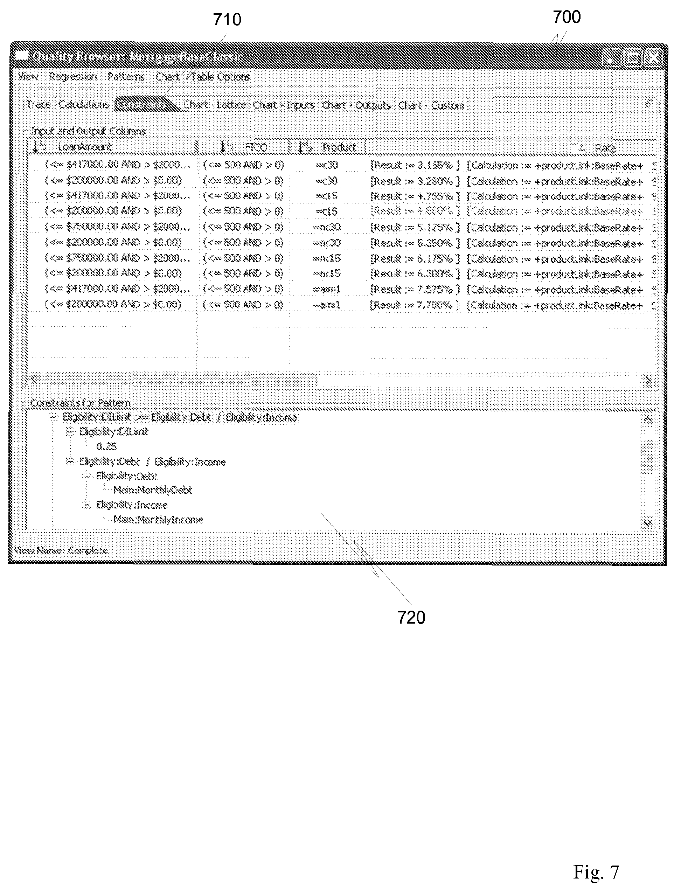

Example #3 - Visual Display of "constraints" for Data Elements in a Semantic Model In Fig. 7, a similar view of the 10 patterns corresponding to the FICO constraints shown above in Fig. 6 is illustrated, however, by the user selecting the constraints tab 710 in interface 700, the Quality Browser module 110 is also visually rendering the constraints defined for loan eligibility. The eligibility rule says that the debt to income ratio must be less than or equal to 25%.

Notice the novel "Constraints for Pattern" pane 720 at the bottom of the interface 700. Here the Quality Browser tool renders the following information from the semantic model 75 relating to debt to income constraint:
1. The location of the ratio. In this example, it is in the Eligibility table.
2. The name of the variable. In this example, it is a numeric variable named DILimit.
3. The amount of the ratio. In this example, it is the value of 0.25 (or 25%).
4. The actual constraint. In this example, it is: DILimit >= debt / income.

Other visualization tools described herein are also are able to display numeric calculations from the semantic model such as the Policy Trace and Regression Trace.

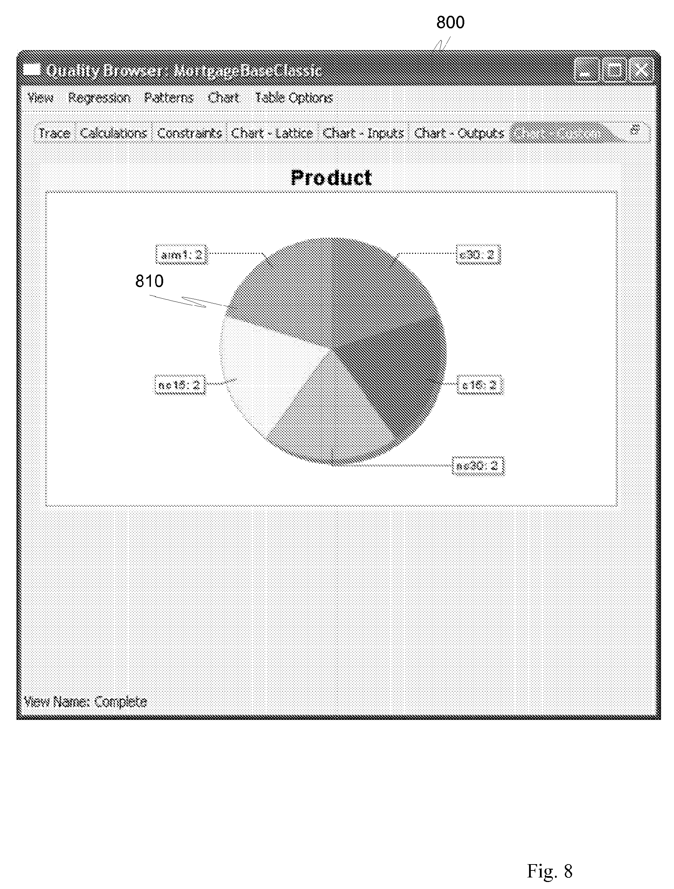

Example #4 - Visual Charting of Data Elements in a Semantic Model In Fig. 8, the Quality Browser renders a pie chart 810 in interface 800 of the output data element product. Here the Quality Browser renders the set of output products (i.e. types of loans) as it relates to the 10 FICO patterns discussed in the previous example. Note the following information from the semantic model 75:
1. There are 2 patterns for each product, an even distribution.
2. There are a total of 10 patterns (for the FICO constraint of > 0 and FICO < 500).
While a pie chart is used in conjunction with this example, it is to be appreciated that any technique for charting data could be used with equal success.

### Automated Creation of Regression Sets using the Regression Set Tool

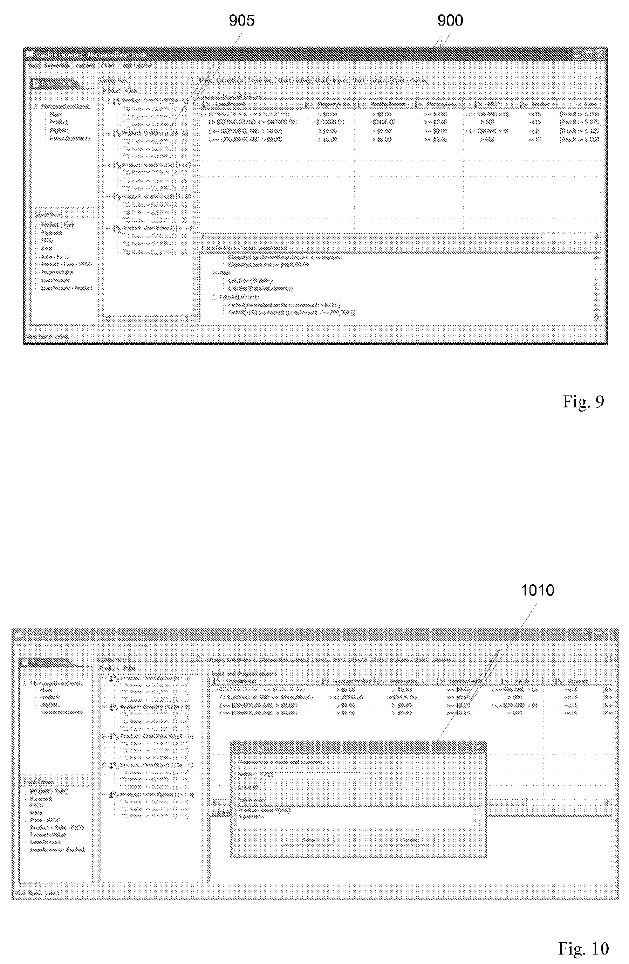

The regression set tool is supported by the regression set module 120, interface module 195, controller 160, memory 170, I/O interface 180, interface module 195 and storage 190, and at least enables the automated creation of regression sets. The automated creation of regression sets is facilitated by the Quality Browser, which allows a user to easily select subsets of the master semantic model based on the ordering of constraints for the individual data elements. For example, and continuing with the above example, all patterns in the master semantic model whose Product data elements have a value of 'c15' can easily be identified and isolated, regardless of the values held by the other data elements as illustrated in Fig. 9. In Fig. 9, interface 900 displays the four patterns 905 whose Product = 'c15' are selected and displayed on the Quality Browser.

From here it is a simple matter to save a copy of the selected patterns as a regression set. A name is given to the regression set for easy identification and the user can enter some comments via interface 1010 in conjunction with the input device 40 as illustrated in Fig. 10. Even though the patterns for the regression set were selected based on a certain data element (Product in this case), all constraints for all data elements for the regression set patterns are saved to the database as part of the regression set. The regression set thus contains all the behavior for the set of selected patterns.

The Quality Browser makes it easy to create regression sets for all or part of the master semantic model. Once a regression set is created from the Quality Browser, it is easy to validate that the functionality encompassed within the regression set is still present within later revisions of the master semantic model. If a certain set of functionality is determined to be correct, a regression set containing that functionality is saved to a database and can be validated at any time in the future against the current state of the system. For example, if the C15 patterns are correct, a user can save an automatically generated regression set as described above. Then, if more products are added to the system, the user will always be able to verify that the C15 functionality is still valid despite the subsequent additions.

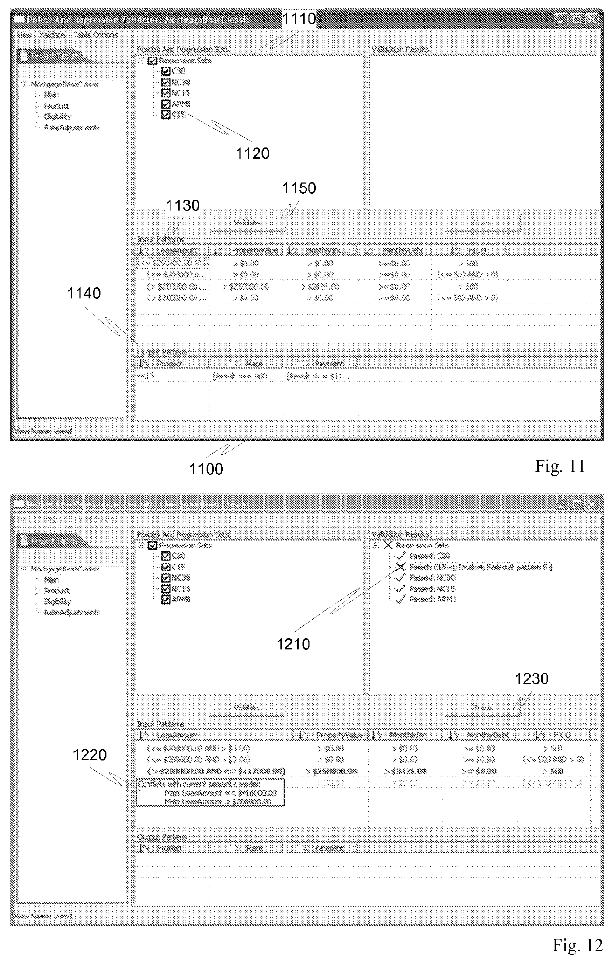

The Policy and Regression Validator is the tool used to view the content and execute validations of saved regression sets. To view the patterns in a regression set, a regression set is selected from the list of saved regression sets 1110 (See Fig. 11, where the regression set "C15" 1120 has been selected in interface 1100) and the corresponding input 1130 and output 1140 patterns are displayed in the lower portion of the interface 1100.

A series or suite of regression sets could also be validated en masse in the Policy and Regression Set Validator. For example, all saved regression sets displayed can be selected to be run on the next validation. Once the Validate button 1150 is pressed, each checked regression set is run to see if its behavior is still contained within the master semantic model as illustrated in Fig. 12.

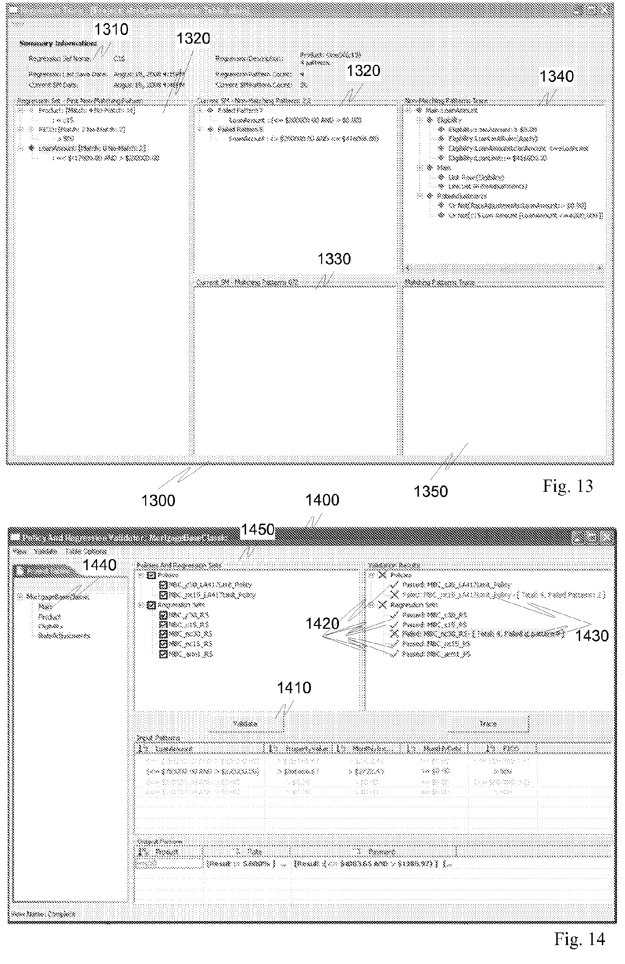

Once the validation has completed, the results for each regression set is clearly indicated as either a success or failure. In the example in Fig. 11, there is a suite of regression sets, one for each product subset of the system. The validation has been executed on all regression sets and all regression sets passed validation except the C15 regression set as illustrated in Fig. 12 and denoted by the red "X" and "Failed" 1210. For the C15 failure, the reason 1220 for the failure is displayed: the Loan Amount constraint on one of the C15 patterns is unsupported in the master semantic model. Additional information on the failed regression set is available on the Regression Trace interface 1300, which is displayed when a failed regression set and Trace button 1230 (as shown in Fig. 12) are selected with the result being displayed as illustrated in interface 1300 shown in Fig. 13. Interface 1300 can include such information as the regression set name 1310, non-matching patterns information 1320, matching patterns information 1330, non-matching patterns trace information 1340 and matching patterns trace information 1350.

### Automated Validation using the Automated Validation Tool

In traditional software engineering, regression validation is a tedious process that involves encapsulating a set of test cases or scenarios that are deemed to provide as much application behavior coverage as possible. Each of these test cases or scenarios then have to be executed against the latest application revision, and verified by comparing the realized output with the expected output. This comparison is generally done manually by a person and can take a long time depending upon the size of the application.

The Automated Validation tool provides a fast and complete answer to the question of whether the current behavior encapsulated by the master SM is still consistent with any past behavior that was archived in the forms of regression SMs and policy SMs. The automated validation tool is supported by the validation module 130, interface module 195, controller 160, memory 170, I/O interface 180 and storage 190.

An exemplary embodiment of the automated validation tool illustrated in interface 1400 in Fig. 14 is different than the traditional software engineering regression validation process in that it is automated and can be run on one or more of the policies and regression sets against the current application with one click of the "Validate" button 1410. Because the semantic models can be thought of as a database of application behavior that can be queried and compared, validation is not a matter of executing test cases and comparing outputs. Rather, subsumption based reasoning can be used to correctly and completely determine whether the behavior archived in regression SMs and policy SMs is still present and consistent with the current master SM. The green checkmarks 1420 in Fig. 14 signal consistent behavior between the master SM and the Regression or policy SM. The red "X' 1430 signals a discrepancy in behavior between the semantic models.

In operation, the tool is opened on a specific master SM of a project. In the case of Fig. 14, the "Main" master SM 1440 and all of its associated regression SMs and policy SMs 1450 that were saved based on a previous or current state of the master SM are displayed. The way in which regression SMs and policy SMs are created and then save to long term storage (database and/or file system or the like) is illustrated in Figs. 15 and 16.

Specifically, Fig. 15 illustrates how the master SM can be viewed and filtered by data element in the Quality Browser. Once the user has identified a portion of behavior that they want to encapsulate and archive as a regression SM, they select the appropriate node and then select from the drop down menu "Regression > Save As". Interface 1520 is then provided such that a user can enter information including name and comments. In Fig. 15, 4 patterns 1510 of behavior are encapsulated that involve the Product c15. Thus, any future validation against this particular regression SM would be concerned with modifications that affect the data element Product c15.

Fig. 16 illustrates how a user specifies a policy SM and how the user can save this specification for later validation. The top two tables' (Query Input Values 1610 and Query Output Values 1620) functionally allow the user to query for a subset of master SM behavior that this Policy will apply to. The bottom two tables (Policy Input Values 1630 and Policy Output Values 1640) provide the ability to create constraints that must be satisfied by some behavior (depending upon Policy Scope) of the master SM. Once the query and the policy constraints are specified, they can be saved by selecting from the drop down menu 1650 "File > Save As...". Additionally, the Policy Editor can also be used to validate the Policy just created against the current master SM. This is done by clicking the "Validate Policy" button 1660 and is functionally equivalent to validating a policy from the Automated Validation Tool.

Looking back at Fig. 14, it is now clear where the list of Policies and Regression Sets is derived. After clicking the "Validate" button, the Polices and Regression Sets that are selected with a checkmark are validated against the current state of the master SM using subsumption based reasoning. In the event that there is a discrepancy, indicated by a red "X", the user can select the failed Policy or Regression Set which then opens the details of the patterns in the bottom tables. The "Trace" button is then enabled which when clicked allows the user to look at the detailed reason why automated validation detected an inconsistency.

There are two types of resulting Trace information, one for Regression Sets and the other for Policies, illustrated in Figs. 17 and 18 respectively.

The purpose of the Regression Set Trace illustrated in Fig. 17 is to show the details behind the reason a Regression Set failed in automated validation. In this particular case, a discrepancy 1710 of the Rate calculated for Product nc30 is illustrated.

### Modes of Query

In one embodiment, the modes of query tool, in cooperation with the query module 140 and one or more of the controller 160, memory 170, I/O interface 180, storage 190 and interface module 195, can be used to define and verify policies that describe the desired behavior of a software system. The source software system (represented by source code 25) and the policy are both represented by semantic models. Using the modes of query tool, the policy model is compared to the source model using subsumption reasoning to validate whether the policy is valid. The results of modes of query can then be explored in the policy trace feature which shows the paths that subsume via the constraints in the policy and state of the modes of query method.

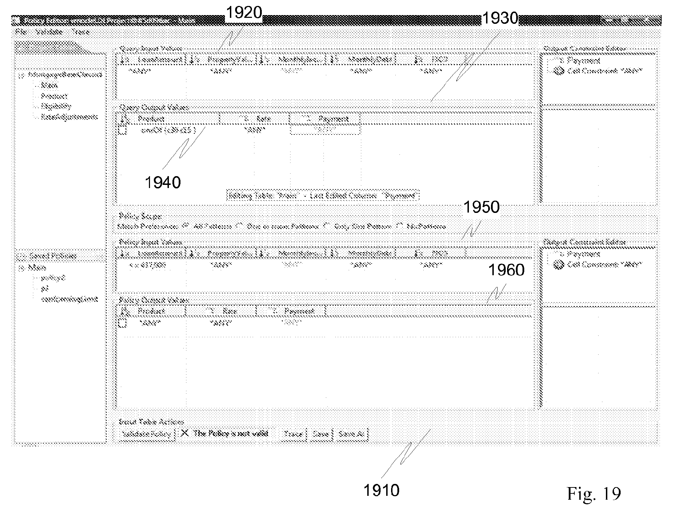

In Fig. 19, one possible embodiment of an interface 1910 associated with the policy editor is show. The editor reflects the Modes of Query operations in that the user can define the following:
- Query constraints,
- Whether the query will be subset or intersection of the source model,
- Match constraints,
- Match preferences, and
- Results of the modes of query method.

To illustrate this problem a simple mortgage products program will be defined as follows:

| Mortgage Product Code | Product Loan Range |
|---|---|
| C15 | >= 0, <= 417,000 |
| C30 | >= 0, <= 417,000 |
| NC15 | >=0, <=750,000 |
| NC30 | >= 200,000, <= 750,000 |

C30 and C15 are conventional loans with a maximum loan value of $417,000. NC30 and NC15 are non-conventional loans with different minimum values and a maximum loan value of $750,000.

In this exemplary embodiment of the policy editor, the query input 1920 and output values 1930 section of the user interface allows the user to specify constraints which will determine which patterns (code paths) of the source software system will be subject to the policy expression (defined in the lower portion of the screen). In this example, the only constraint defined is in the query output section which states that the product code must be either C15 or C30 1940. The patterns that conform to this constraint will be included in the query set of patterns which will then have the policy constraints applied.

Although not relevant to this example, the query section supports the subset and intersection modes of the Modes of Query. The example described above would return only two patterns whether subset or intersection is selected.

In the bottom center of the interface 1910 is the policy input 1950 and output section 1960 (policy input values and policy output values). This is where the policy constraint is specified. In this example, a policy is defined that requires the incoming patterns to have a loan value range of less than or equal to $417,000. This constraint is applied to each pattern in the query set. This constraint is applied to the results of the query from the previous paragraph. Additionally, the match patterns from Modes of Query is defined by the policy and is used to determine whether this policy will apply to all code paths, whether it will apply to at least one code path, whether it will apply to one and only one code path, or whether it will apply to no code paths.

For example, if the range of the C30 product were changed to $417,001, the query set would be {C15, C30}. The policy constraint is defined whereby the Loan Amount must be less than or equal to $417,000 AND the match pattern is declared to be "Match All Models." The policy would fail because the constraint says the range must be less than or equal to $417,000 AND all patterns from the query set must match. In this case, the query pattern C30 would not be subsumed because its range exceeds the policy specified constraint of less than or equal to $417,000.

Using Modes of Query, one policy can replace an infinite number of test cases. In this case for example, all test cases for product C30 and C15, regardless of the values of any other input data elements, can be replaced with this one policy for the scenario where a user is testing whether the system can generate an output result where a C30 or C15 product can at any time have a loan amount that exceeds 417,000.

One exemplary embodiment of Policy Trace illustrated in Fig. 18 shows the details behind the reason a policy failed in the automated validation. In this case, it shows that there are two patterns 1810 of product nc15 that do not meet the constraint that LoanAmount < 417,000.

### Semantic Model to Source Connection

The Quality Browser is a graphical tool that enables one to visually render a semantic model in novel and meaningful ways. In the discussion above, it was detailed how a semantic model is generated from a source language, and during the "semantic model generation" process, information relating back to the original line of source code is retained for future reference within the Semantic model.

The Quality Browser is novel example of a visualization tool that is able to extract that information from the semantic model and render this source information for the end user.

Example #1- Visual Display of Source Connect for a Semantic Model.

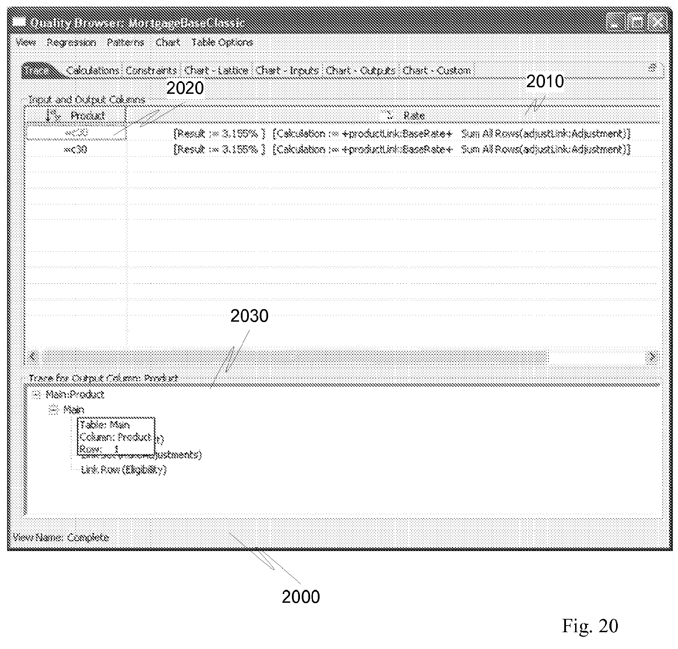

Fig. 20 illustrates the exemplary Quality Browser displaying the patterns 2010 for an exemplary Mortgage application.

Note the novelty in that the Quality Browser is able to render precise source information here. Specifically, the interface 2000 in Fig. 20 displays patterns for the output data element named Product. The Product cell (row1, column 1) 2020 is currently selected (as denoted by the highlighted box) in the upper pane view ("Input and Output Columns") while the lower graphical pane 2030 ("Trace for Output Column: Product") is displaying information as to where this variable and value was defined in the source language. In this case, Quality Browser is showing that the variable 'Product' is defined and assigned the value 'c30' in the table called "Main", in column named 'Product', in the first row of table Main.

Other visualization tools are also able to display 'Source Connect' information from the semantic model. These include Policy Trace and Regression Trace.

Example #2- Visual Display of Source Connect for a Semantic Model.

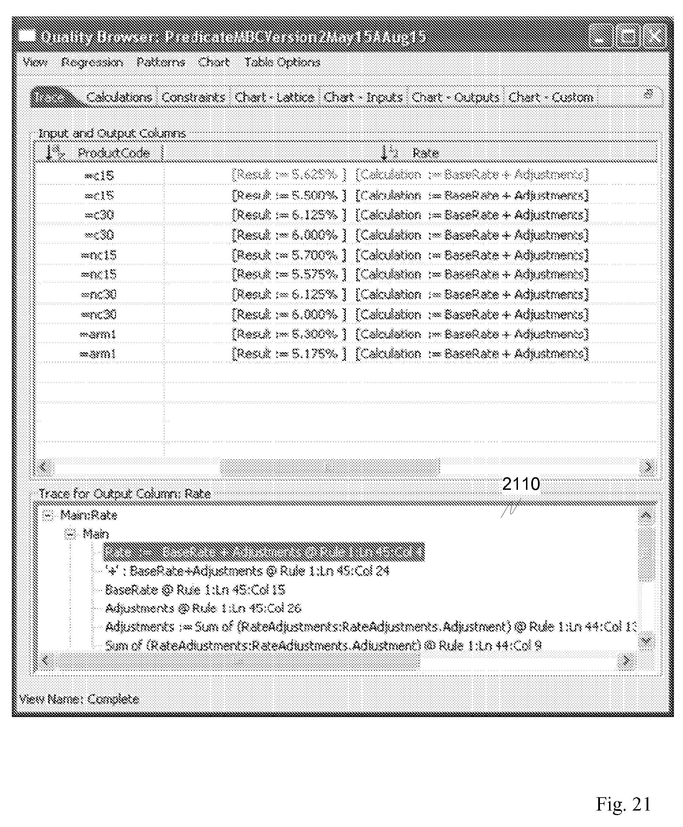

Fig. 21 illustrates the Quality Browser displaying the patterns for an exemplary mortgage application.

Note the in this example, the Quality Browser is able to render source information for a Predicate language. Specifically, Fig. 21 is displaying in the lower pane 2110 (trace for Output Column: Rate), precisely where the highlighted output data element named "Rate" is defined and calculated. The information includes:
1. The name of the predicate source file where the calculation of Rate is defined in 'Main'.
2. The Rule (or instance) in file Main. In this case, it is the first one (i.e. Rule 1)
3. The line number of within the file Main. In this case, line 45.
4. The column for that line number. In this case, column 4 is where the calculation is defined.

The Quality Browser in these examples has demonstrated how the user is able to trace back to the source code the exact locations where a given data element is assigned, constrained or calculated.

Two variations of automated quality services have also been developed: policy and regression set. A policy is a logical statement about a desired behavior of a software system (both the source software system and corresponding executable.) It can be applied to either an entire semantic model or a subset of the SM. Policy in action determines the validity of queries in the form of: "Does the system conform to this behavior"? A regression set is a snapshot of system behavior captured in a semantic model and its corresponding source software system; it is used to automate the QA regression testing process. A regression set is used to formulate the query: "does the capability that existed at that earlier point in time still exist in the semantic model after these specific changes have been made"? In the rest of this document, when we want to generally describe an instance of invoking either the policy or regression set quality service, we will say we are enacting a query on the semantic model. This means we are converting the source of the policy or regression set to a semantic model and comparing this to the full master semantic model using subsumption.

The "source code" or specification language is used to build a source software system. This specification language used in this document and which is implemented in the current ioRules user interface consists of a series of tables and links, each table consists of cells organized into rows and columns similar to a spreadsheet. There are calculations, rules, and other formulas in these individual cells. Valid semantic models can be generated from other computer languages as well, but herein, the examples that show the structure and contents of source code will be in the form of these tables, links, rows, columns, cells, and the calculations, rules and other formulas contained in these cells. These same quality tools and concepts could work with other source languages used to generate executable semantic models. The examples do not imply that these concepts would work only with the particular source language used in the examples.

A query of a semantic model using either a policy or a regression set will result in either a valid or invalid result. If valid, the current semantic model conforms to the policy or regression set, if invalid, there is a conflict in the logic of the semantic model when compared to the logic of the policy or regression Set. After a query, if the result was as expected, the user may move on to other queries. If the result is not as expected, the user will likely want to know "why was it not as expected and what specific area of the code is causing the query result to be different than expected"? This is critical since if one intends to change the code to correct a problem in a program, then one needs to know where in the code the program logic is working in an incorrect way.

Conversely, if the problem is not in the program but instead is in the way a query has been constructed, it is still extremely valuable to review the program logic to confirm that the logic is structured in the way it was intended.

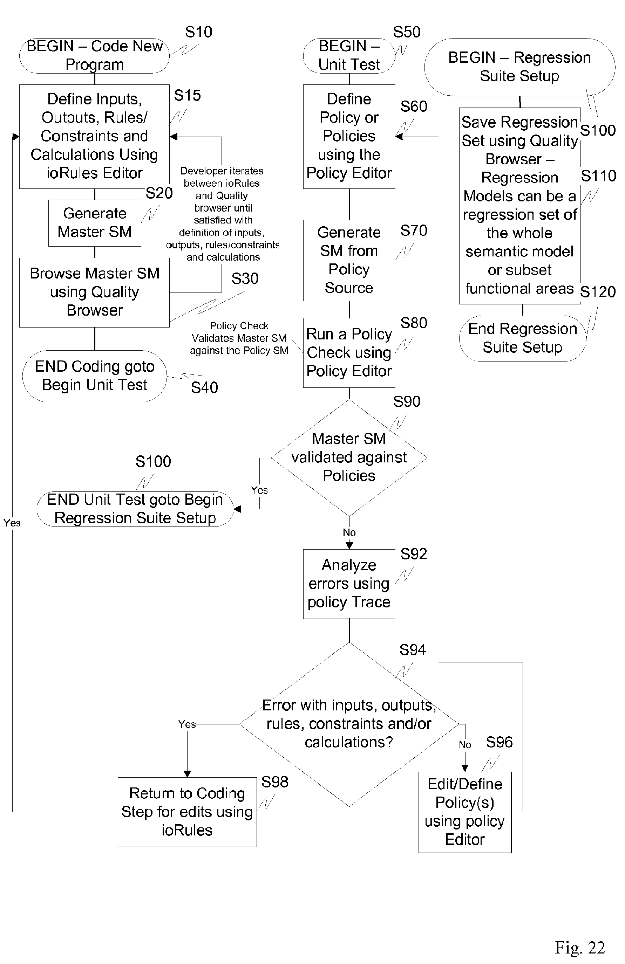

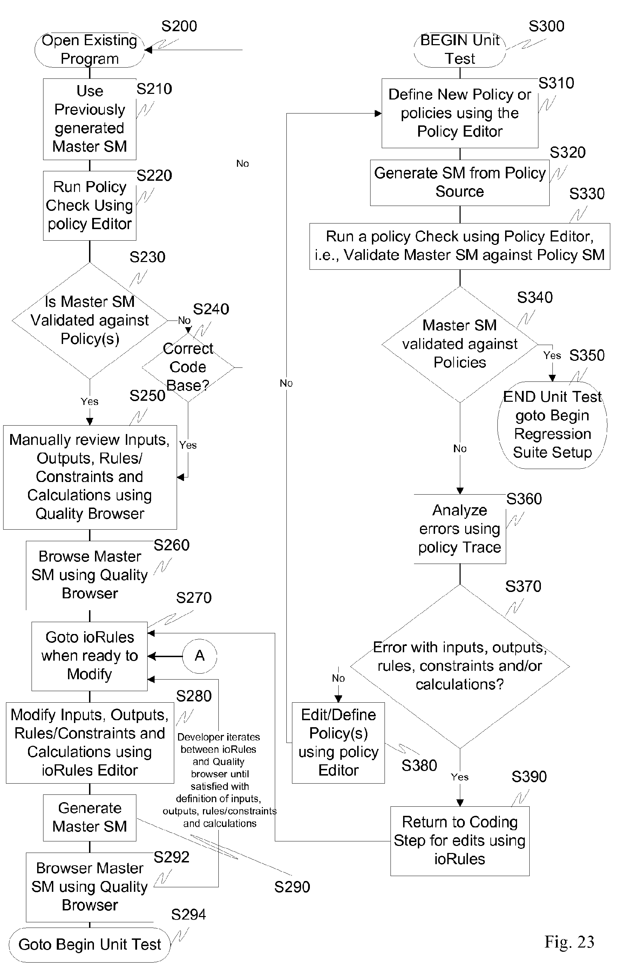

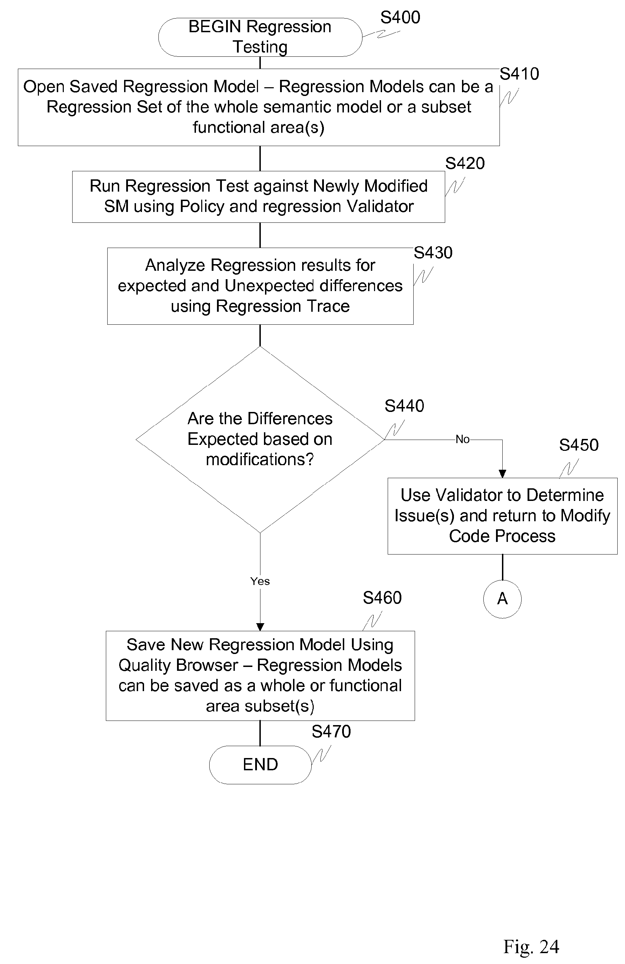

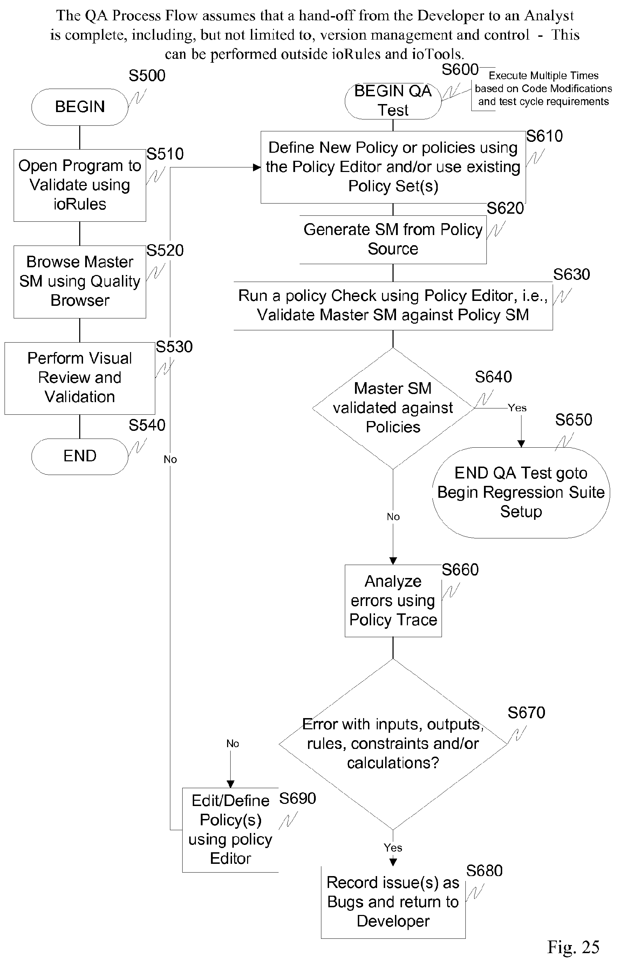

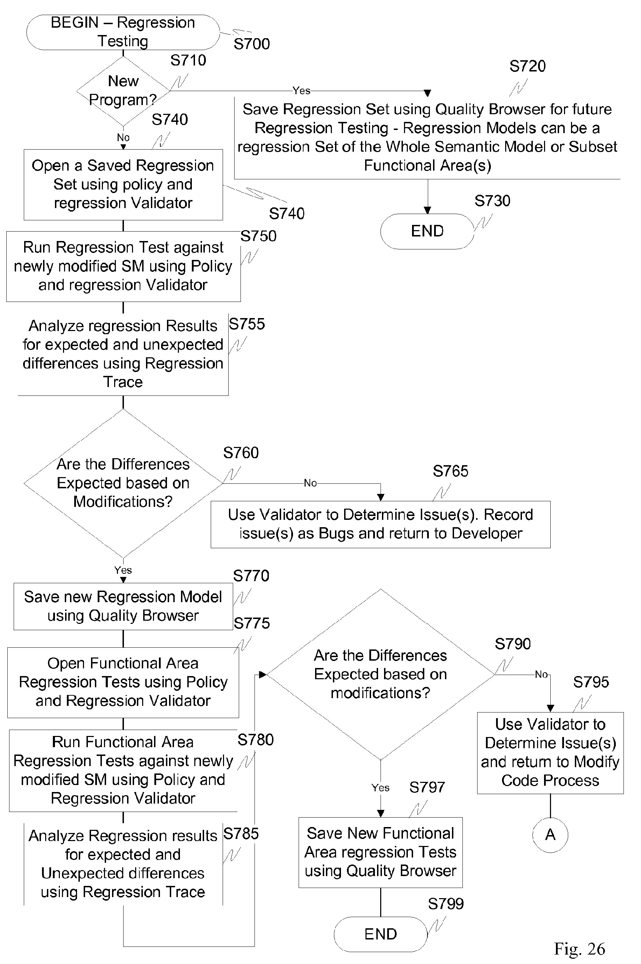

Figs. 22-26 illustrate exemplary methods of performing software QA according to this invention. More particularly, Fig. 22 illustrates an exemplary method of developing a new program from a developer's perspective, Fig. 23 illustrates an exemplary method of modifying an existing program from a developer's perspective, Fig. 24 illustrates an exemplary method of regression testing for an existing program from a developer's perspective, Fig. 25 illustrates an exemplary method of quality assurance testing for a new or updated program and Fig. 26 illustrates an exemplary method of regression testing.

Control begins in step S10 with coding of a new program. Next, in step S15, a user, such as a programmer, defines one or more inputs, outputs, rules, constraints and calculations using, for example, the ioRules editor. Then, in step S20, a master semantic model is generated. Control then continues to step S30.

In step S30, the developer is able to browse a master semantic model using the quality browser. The developer can iterate between the ioRules editor and the quality browser and repeat the generation of the master semantic model step S20 until satisfied with the definition of inputs, outputs, rules, constraints and calculations. Control then continues to step S40 where the control sequence ends.

Step S50 begins the testing phase of the development process. Next, in step S60, one or more policies are defined utilizing the policy editor. Then, in step S70, a semantic model is generated from the policy source. Control then continues to step S80.

In step S80, a policy check is run using the policy editor. The policy check validates the master semantic model against the policy semantic model. Next, in step S90, a determination is made whether the master semantic model is validated against the defined policies. If the master semantic model is validated against the defined policies, control continues to step S100 where control continues to the regression suite setup.

However, if the master semantic model is not validated against the defined policies, control continues to step S92 where one or more errors are analyzed using policy trace. Next, in step S94, a determination is made whether there is an error with the defined inputs, outputs, rules, constraints and/or calculations. If there is an error with one of these items, control continues to step S98 where control returns back to step S15 to allow a developer to modify the code.

If however there are no errors with the inputs, outputs, rules, constraints and/or calculations, control continues to step S96 where the defined policies are edited and/or new policies are defined using the policy editor with control jumping back to step S60.

The regression suite setup begins in step S100 with control continuing to step S110. In step S110, the initial regression set is saved using the quality browser. This regression set can be a regression set of the whole semantic model or a subset of functional areas within the semantic model. This saved regression set is used for future regression testing to ensure updates to the program do not affect prior program operation. Control then continues to step S120 where the control sequence ends.

Fig. 23 outlines an exemplary technique for a user, such as a developer, to modify an existing program. In particular, control begins in step S200 with the opening of an existing program. Next, in step S210, a previously generated master semantic model is opened for use. Then, in step S220, a policy check is run using the policy editor. Control then continues to step S230.

In step S230, a determination is made whether the master semantic model is validated against the one or more policies. If the master semantic model is not validated against the one or more policies, control continues to step S240 where a determination is made whether the correct code base is being used. If it is not the correct code base, control jumps back to step S200. Otherwise, control continues to step S250.

In step S250, the quality browser can be utilized to review inputs, outputs, rules, constraints and calculations. Next, in step S260, the quality browser can be used to browse the master semantic model. Then, in step S270 the user can go to ioRules when ready to modify one or more of the inputs, outputs, rules, constraints and calculations. Control then continues to step S280.

In step S280, a developer modifies one or more of the inputs, outputs, rules, constraints and calculations using, for example the ioRules editor. Next, in step S290, the master semantic model is generated based on the above modifications. Then, in step S92, the master semantic model can be browsed using the quality browser. The developer iterates between steps S270 and S292 until they are satisfied with the definition of inputs, outputs, rules, constraints and calculations. Control then continues to step S294 where the control sequence ends.

For developer unit testing of an existing program, control begins in step S300 and continues to step S310. In step S310, one or more policies are defined using the policy editor. Next, in step S320, a semantic model is generated from the policy source. Then, in step S330, a policy check is run utilizing the policy editor where the master semantic model is validated against the policy semantic model. Control then continues to step S340.

In step S340, a determination is made whether the master semantic model is validated against the defined policies. If the master semantic model is validated against the defined policies, control continues to step S350 where the control sequence ends and the user can proceed to regression testing.

If the master semantic model is not validated against the policies, control continues to step S360 where policy trace can be utilized to analyze and visualize errors. Next, in step S370, a determination is made whether there are errors with one or more of the inputs, outputs, rules, constraints and calculations. If there are errors, control continues to step S390 where the user returns to editing the code in step S270 using, for example, the ioRules editor.

If there are no errors in step S370, control continues to step S380 where one or more of the policies are edited and/or new policies defined with control jumping back to step S310.

Fig. 24 outlines regression testing for a user, such as a developer, having an existing program. In particular, control begins in step S400 and continues to step S410. In step S410, the regression set saved in step S110 is opened. Next, in step S420, a regression test is run against the newly modified semantic model using the policy and regression validator. Then, in step S430, the regression results are analyzed to visualize expected and unexpected differences utilizing regression trace. Control then continues to step S440.

In step S440, a determination is made whether any differences detected in step S430 are expected based on the code modifications. If the differences are not expected, control continues to step S450 where a validator is used to determine what the source of the unexpected difference is with control returning to allow modification of the code process in step S270.

If the differences are expected, control continues to step S460 where the regression model is saved using, for example, the quality browser. Control then continues to step S470 where the control sequence ends.

Figs. 25 and 26 outline a quality assurance process flow that assumes a hand-off from the developer to a quality assurance analyst has been completed. This may include completion of version management and control by the developer and it is to be appreciated this can be performed by any known or later developed methodology.

For the quality assurance phase of software development, control begins in step S500 and continues to step S510. In step S510, a program is opened to validate using, for example, the I/O Rules editor. Next, in step S520, the master semantic model is browsed utilizing the quality browser. Then, in step S530, visual review and validation is performed with control continuing to step S540.

The quality assurance testing methodology beginning at step S600 is executed multiple times based on code modifications and test cycle requirements. In step S610, a policy editor is used to define one or more new policies and/or existing policy sets are loaded. Next, in step S620, a semantic model is generated from the policy source. Then, in step S630, a policy check is run utilizing the policy editor. In this step, the master semantic model is validated against the policy semantic model. Control then continues to step S640.

In step S640, a determination is made whether the master semantic model is validated against the one or more policies. If the master semantic model is validated against one or more policies, control continues to step S650 where the quality assurance testing ends and control continues to regression testing in step S700.

If the master semantic model is not validatable against the policies, control continues to step S660 where policy trace is used to analyze the errors. Next, in step S670, a determination is made whether the one or more errors are with the inputs, outputs, rules, constraints and/or calculations. If the errors are with one or more of these items, control continues to step S680 where the issue(s) are recorded and saved and returned to the developer as "bugs."

If the errors are not with one of these items, control continues to step S690 where the one or more policies can be edited and/or new policies defined using the policy editor with control jumping back to step S610 and the process repeated.

Fig. 26 outlines the regression testing portion of quality assurance by, for example, a quality assurance specialist. Control begins in step S700 and continues to step S710. In step S710, a determination is made whether the regression testing is for a new program or an existing program. If it is a new program, control continues to step S720 where a regression set is saved using, for example the quality browser, with this regression set being used for future regression testing. Control then continues to step S730 where the control sequence ends.

If the regression testing is for an existing program, control continues to step S740 where the saved regression set is opened using, for example, the policy and regression validator. Next, in step S750, a regression test is run against the updated semantic model using the policy and regression validator. Then, in step S755, results of the test are analyzed to determine one or more of expected and unexpected differences utilizing, for example, regression trace. Control then continues to step S760.

In step S760, a determination is made whether the differences are expected based on prior modifications. If the differences are not expected, control continues to step S765 where the validator is used to determine the issues with these issues being recordable as bugs at which point the process returns back to the developer for modification.

If the differences are expected, control continues to step S770 where the regression model is saved as a new regression model using the quality browser. Next, in step S775, the functional area regression tests are opened using the policy and regression validator. Then, in step S780, functional area regression tests are run against the newly modified semantic model using, for example, the policy and regression validator. Control then continues to step S785.

In step S785 the regression results are analyzed for expected and unexpected differences using, for example, regression trace. Next, in step S790, a determination is made whether the differences are expected. If the differences are expected, in step S797 the new functional area regression tests are saved using, for example, the quality browser with control continuing to step S799 where the control sequence ends. If the differences are unexpected, control continues to step S795 where the validator is used to determine issues with control returning to the modified code process.

It is appreciated that a lesser or more equipped computer system than the example described above may be desirable for certain implementations. Therefore, the configuration of system illustrated in the figure can vary from implementation to implementation depending upon numerous factors, such as its intended use, price constraints, performance requirements, storage requirements, technological improvements, and/or other circumstances, or the like.

It should be noted that while the embodiments and methods described herein may be performed and used with a computer similar to the one described herein, other embodiments and variations can be used with computer that vary from the described example. Therefore, nothing disclosed herein concerning the configuration of the illustrated computer should be construed as limiting the present invention to a particular embodiment wherein the recited operations are performed by a specific combination of hardware components.

The various embodiments and variations thereof illustrated in the accompanying Figures and/or in the totality of this document are merely exemplary and are not meant to limit the scope of the invention. It is to be appreciated that numerous variations of the invention have been contemplated as would be obvious to one of ordinary skill in the art with the benefit of this disclosure. Additionally, while certain features may be categorized under one or more headings to assist with readability, it is to be appreciated that the feature(s) described under a particular heading may be used in associating with other portions of the specification and/or feature(s) described herein.

While the above described methodology has been discussed in relation to a particular sequence of events, it should be appreciated that minor changes to this sequence can occur without materially effecting the operation of the invention.

The above-described system and methodology, as has been indicated herein, can be implemented on a computing device, such as a personal computer, server, dedicated computing device, distributed processing system, or the like, or a separately programmed general purpose computer. Additionally, the systems and methods of this invention can be implemented on a special purpose computer, a programmed microprocessor or microcontroller and peripheral integrated circuit element(s), an ASIC or other integrated circuit, a digital signal processor, a hard-wired electronic or logic circuit such as a discrete element circuit, a programmable logic device such as a PLD, PLA, FPGA, PAL, or the like, in fuzzy logic, artificial intelligence and/or neural networks. In general, any device(s) or module capable of implementing a state machine that is in turn capable of implementing the processes described herein can be used to implement this invention.

Furthermore, the disclosed methods may readily implemented in software using, for example, object or object-oriented software development environments that provide portable source code that can be used on a variety of computer or workstation platforms. The software can be stored on a computer-readable medium, with the software including one or more processor executable instructions. The disclosed system and methodology may also be implemented partially or fully in hardware using standard logic circuits or, for example, a VLSI design. Whether software or hardware is used to implement the systems in accordance with this invention is dependent on the speed and/or efficiency requirements of the system, the particular function, and the particular software or hardware systems or microprocessor or microcomputer systems being utilized. The systems and methods illustrated herein can be readily implemented in hardware and/or software using any suitable systems, means, structures, devices and/or the functionality stored on an appropriate information storage medium, by those of ordinary skill in the applicable art from the functional description provided herein and with a basic general knowledge of the computer and software arts.

While the embodiments illustrated herein may show the various components collocated, it is to be appreciated that the various components of the system can be located at distant portions of a distributed network, such as a communications network and/or the Internet and/or within a dedicated communications network. Thus, it should be appreciated that the various components can be combined into one or more devices or collocated on a particular node of a distributed network, such as a communications network. As will be appreciated from the description, and for reasons of computational efficiency, the components can be arranged at any location within a distributed network without affecting the operation of the system.

Furthermore, it should be appreciated that various links connecting elements can be wired or wireless links, or a combination thereof, or any known or later developed element(s) that is capable of supplying and/or communicating data to and from the elements.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Further aspects of the invention are:
1. A method for quality assurance in a software environment comprising:
   providing a quality display interface allowing a human readable representation of source code to be one or more of explored, viewed, charted and queried;
   providing a regression testing tool allowing validation of updates to the source code;
   providing an automated validation tool enabling, through subsumption reasoning, validation of behavior between one or more portions of one or more semantic models;
   providing a query and verification interface allowing multiple modalities of query and verification against a semantic model corresponding to the source code; and
   providing an interface visualizing data flow analysis from the semantic model to the source code.
2. A method for quality assurance testing of a software application comprising:
   rendering a human readable representation of the software application allowing one or
   more of exploring, viewing, charting, debugging and querying;
   validating updates to the software application by regression testing;
   validating, through subsumption reasoning, behavior between one or more portions of one or more semantic models corresponding to the software application;
   allowing multiple modalities of query and verification against a semantic model corresponding to the software application; and
   visualizing data flow analysis from the semantic model to the software application.
3. The method of aspect 2, wherein the software application is source code.
4. The method of aspect 2, wherein an error discovered by one or more of the regression testing, validating and querying is displayed in human readable form along with an indicator of where in the software application a pattern giving rise to the error occurs.
5. The method of aspect 4, wherein the pattern represents one code execution path through the software application.
6. The method of aspect 5, wherein the pattern enables visualization, for a given set of inputs, the resultant output.
7. The method of aspect 2, wherein the regression testing can be for all or a part of the software application.
8. The method of aspect 7, wherein for regression testing, a saved set of regression patterns is subsumed by a master semantic model.
9. The method of aspect 8, wherein, for each pattern, at least one pattern in the master semantic model all of whose data element constraints must subsume the respective data element constraint in the regression set pattern.
10. The method of aspect 9, wherein behavior of all data elements in the regression set pattern must be simultaneously subsumed by at least one pattern in the master semantic model for the regression pattern to be valid.
11. The method of aspect 10, wherein the regression testing verifies that functionality within a subset of the software application is preserved after the software application is updated.
12. The method of aspect 2, wherein validation allows a current semantic model to be validated against one or more of a prior semantic model and any query and constraint combination.
13. The method of aspect 12, wherein upon validation failing, a user can drill down into the cause of the failure to find an inconsistency and trace the inconsistency back to a software source specification.
14. The method of aspect 13, wherein subsumption reasoning determines if the semantic model is a subset or intersection of behavior defined by another semantic model.
15. The method of aspect 14, wherein each pattern in a regression semantic model is cycled through to find at least one other pattern in the master semantic model that subsumes each pattern.
16. The method of aspect 2, further comprising generating a query semantic model from the query expression, wherein a constraint or a result semantic model is a set of patterns that can logically satisfy an intersection query or whose behavior is entirely subsumed by a subset query.
17. The method of aspect 16, wherein querying is defined by query and constraint modes on input and output values.
18. The method of aspect 17, wherein the query modes are subset and intersect.
19. The method of aspect 2, wherein the visualization utilizes references to the software application that are generated during creation of the semantic model.
20. The method of aspect 19, wherein the references are source code information.
21. The method of aspect 20, wherein the source code information contains a location in a source of model logic applied to a data element and a description of one or more constraints on the data element.
22. The method of aspect 21, wherein logical relationships with other data elements and identities of dependent data elements are also displayed.
23. The method of aspect 22, wherein a user can visualize where a given data element is one or more of assigned and constrained, and have information related to that data element displayed.
24. The method of aspect 20, wherein the source information is organized by one or more of table, predicate, subprocedure call, GUI, text file and other authoring mediums.
25. A quality assurance method for software development, wherein inputs, outputs, rules, constraints and calculations have been defined for a software application and a master semantic model has been generated comprising:
   viewing, analyzing and displaying, through querying of the semantic model, one or more sets of outputs of the software application, wherein each output is displayed in conjunction with a portion of the executable code path used to generate that output.
26. A computer-readable medium including instructions that when executed perform the functionality of any one or more of the above aspects.
27. Means for performing the functionality of any one or more of the above aspects.
28. Any one or more of the features as substantially described herein.
29. One or more modules for performing the functionality of any one or more of the above aspects.
30. A quality assurance suite of tools for testing of a software application comprising:
   a quality display module adapted to render a human readable representation of the software application allowing one or more of exploring, viewing, charting, debugging and querying;
   a regression set module adapted to validate updates to the software application by regression testing;
   a validation module adapted to validate, through subsumption reasoning, behavior between one or more portions of one or more semantic models corresponding to the software application;
   a query module adapted to allow multiple modalities of query and verification against a semantic model corresponding to the software application; and
   a source connection module adapted to visualize data flow analysis from the semantic model to the software application.
31. The system of aspect 30, wherein the software application is source code.
32. The system of aspect 30, wherein an error discovered by one or more of the regression testing, validating and querying is displayed in human readable form along with an indicator of where in the software application a pattern giving rise to the error occurs.
33. The system of aspect 32, wherein the pattern represents one code execution path through the software application.
34. The system of aspect 33, wherein the pattern enables visualization, for a given set of inputs, the resultant output.
35. The system of aspect 30, wherein the regression testing can be for all or a part of the software application.
36. The system of aspect 35, wherein for regression testing, a saved set of regression patterns is subsumed by a master semantic model.
37. The system of aspect 36, wherein, for each pattern, at least one pattern in the master semantic model all of whose data element constraints must subsume the respective data element constraint in the regression set pattern.
38. The system of aspect 37, wherein behavior of all data elements in the regression set pattern must be simultaneously subsumed by at least one pattern in the master semantic model for the regression pattern to be valid.
39. The system of aspect 38, wherein the regression testing verifies that functionality within a subset of the software application is preserved after the software application is updated.
40. The system of aspect 30, wherein validation allows a current semantic model to be validated against one or more of a prior semantic model and any query and constraint combination.
41. The system of aspect 40, wherein upon validation failing, a user can drill down into the cause of the failure to find an inconsistency and trace the inconsistency back a software source specification.
42. The system of aspect 41, wherein subsumption reasoning determines if the semantic model is a subset or intersection of behavior defined by another semantic model.
43. The system of aspect 42, wherein each pattern in a regression semantic model is cycled through to find at least one other pattern in the master semantic model that subsumes each pattern.
44. The system of aspect 30, wherein a query semantic model is generated from the query expression, and wherein a constraint or a result semantic model is a set of patterns that can logically satisfy an intersection query or whose behavior is entirely subsumed by a subset query.
45. The system of aspect 44, wherein querying is defined by query and constraint modes on input and output values.
46. The system of aspect 45, wherein the query modes are subset and intersect.
47. The system of aspect 30, wherein the source connection module utilizes references to the software application that are generated during creation of the semantic model.
48. The system of aspect 47, wherein the references are source code information.
49. The system of aspect 48, wherein the source code information contains a location in a source of model logic applied to a data element and a description of one or more constraints on the data element.
50. The system of aspect 49, wherein logical relationships with other data elements and identities of dependant data elements are also displayed.
51. The system of aspect 50, wherein a user can visualize where a given data element is one or more of assigned and constrained, and have information related to that data element displayed on an output device.
52. The system of aspect 48, wherein the source information is organized by one or more of table, predicate, subprocedure call, GUI, text file and other authoring mediums.

## Claims

1. Method for quality assurance testing of a software application comprising:
rendering a human readable representation of the software application allowing one or more of exploring, viewing, charting, debugging and querying;
validating updates to the software application by regression testing;
validating, through subsumption reasoning, behavior between one or more portions of one or more semantic models corresponding to the software application;
allowing multiple modalities of query and verification against a semantic model corresponding to the software application, the semantic model being a finite input/output semantic model dictating that the software application has a completely decidable data flow; and
visualizing, on a display, data flow analysis from the semantic model to the software application, wherein the visualizing is based on accumulated logic and
source connection information generated during creation of the semantic model for all input and output data elements in the software application, the visualizing further displaying a complete picture of a behavior of the software application as well as a precise source location(s) in the software application that specified the behavior;
and/or
rendering, preferably using a semantic model, a human readable representation of the software application allowing one or more of exploring, viewing, charting, debugging and querying, preferably wherein a semantic model is a complete and equivalent representation of the behavior of a source software;
validating updates to the software application, preferably automatically, by regression testing preferalbly using a regression set, which preferably is a complete and correct snapshot of the behavior of all or a portion of the software;
validating, preferably automatically, through subsumption reasoning, which preferably is a subset comparison of an input-output effect on data elements between two semantic models, behavior between one or more portions of one or more semantic models corresponding to the software application;
allowing multiple modalities of query and verification against the semantic model corresponding to the software application.

2. Method for quality assurance testing of a software application comprising:
validating the software application by a computer executing a regression testing module;
validating, by a testing module of the computer wherein the testing module comprises subsumption reasoning, behavior between one or more portions of one or more semantic models corresponding to the software application;
executing at least one modality of query and verification against a semantic model corresponding to the software application, the semantic model being a finite input/output semantic model dictating that the software application has a decidable data flow; and
outputting to a receiver indicia of a data flow analysis of the semantic model to the software application, wherein the indicia of the data flow analysis comprises accumulated logic and source connection information generated during creation of the semantic model for input and output data elements in the software application, and the indicia further comprising a representation of a behavior of the software application and a source location(s) in the software application that specified the behavior.

3. The method of claim 1 or 2, wherein the software application is source code; and/or wherein an error discovered by one or more of the regression testing, validating and querying is displayed in human readable form along with an indicator of where in the software application a pattern giving rise to the error occurs, preferably wherein the pattern represents one code execution path through the software application, more preferably wherein the pattern enables visualization, for a given set of inputs, the resultant output.

4. The method of any one of the preceding claims, wherein the regression testing can be for all or a part of the software application, preferably wherein for regression testing, a saved set of regression patterns is subsumed by a master semantic model.

5. The method of any one of the preceding claims, wherein validation allows a current semantic model to be validated against one or more of a prior semantic model and any query and constraint combination, preferably wherein upon validation failing, a user can drill down into the cause of the failure to find an inconsistency and trace the inconsistency back to a software source specification, more preferably wherein subsumption reasoning determines if the semantic model is a subset or intersection of behavior defined by another semantic model.

6. The method of any one of the preceding claims, further comprising generating a query semantic model from the query expression, wherein a constraint or a result semantic model is a set of patterns that can logically satisfy an intersection query or whose behavior is entirely subsumed by a subset query.

7. The method of any one of the preceding claims, wherein the visualization utilizes references to the software application that are generated during creation of the semantic model, preferably wherein the references are source code information.

8. A quality assurance suite of tools for testing of a software application comprising:
a quality display module (110) adapted to render, preferably using a semantic model, a human readable representation of the software application allowing one or more of exploring, viewing, charting, debugging and querying, preferably wherein a semantic model is a complete and equivalent representation of the behavior of a source software;
a regression set module (120) adapted to, preferably automatically, validate updates to the software application by regression testing preferably using a regression set, which is a complete and correct snapshot of the behavior of all or a portion of the software;
a validation module (130) adapted to, preferably automatically, validate, through subsumption reasoning, which preferably is a subset comparison of an input-output effect on data elements between two semantic models, behavior between one or more portions of one or more semantic models corresponding to the software application;
a query module (140) adapted to allow multiple modalities of query and verification against the semantic model corresponding to the software application; and
a source connection module (150) adapted to visualize data flow analysis from the semantic model to the software application.

9. The system of claim 8, wherein the software application is source code.

10. The system of claim 8 or 9, wherein an error discovered by one or more of the regression testing, validating and querying is displayed in human readable form along with an indicator of where in the software application a pattern giving rise to the error occurs, preferably wherein the pattern represents one code execution path through the software application, more preferably wherein the pattern enables visualization, for a given set of inputs, the resultant output.

11. The system of any one of claims 8 to 10, wherein the regression testing can be for all or a part of the software application, preferably wherein for regression testing, a saved set of regression patterns is subsumed by a master semantic model.

12. The system of any one of claims 8 to 11, wherein validation allows a current semantic model to be validated against one or more of a prior semantic model and any query and constraint combination, preferably wherein upon validation failing, a user can drill down into the cause of the failure to find an inconsistency and trace the inconsistency back a software source specification, more preferably wherein subsumption reasoning determines if the semantic model is a subset or intersection of behavior defined by another semantic model.

13. The system of any one of claims 8 to 12, wherein a query semantic model is generated from the query expression, and wherein a constraint or a result semantic model is a set of patterns that can logically satisfy an intersection query or whose behavior is entirely subsumed by a subset query.

14. The system of any one of claims 8 to 13, wherein the source connection module (150) utilizes references to the software application that are generated during creation of the semantic model, preferably wherein the references are source code information, more preferably wherein the source information is organized by one or more of table, predicate, subprocedure call, GUI, text file and other authoring mediums.

15. A quality assurance suite of tools for testing of a software application comprising:
a quality display module adapted to render a human readable representation of the software application allowing one or more of exploring, viewing, charting, debugging and querying;
a regression set module adapted to validate updates to the software application by regression testing;
a validation module adapted to validate, through subsumption reasoning, behavior between one or more portions of one or more semantic models corresponding to the software application;
a query module adapted to allow multiple modalities of query and verification against a semantic model corresponding to the software application, the semantic model being a finite input/output semantic model dictating that the software application has a completely decidable data flow; and
a source connection module adapted to visualize data flow analysis from the semantic model to the software application, wherein the visualizing of the data flow analysis is based on accumulated logic and source connection information generated during creation of the semantic model for all input and output data elements in the software application, the visualizing further displaying a complete picture of a behavior of the software application as well as a precise source location(s) in the software application that specified the behavior.
